# EUROPEAN PATENT SPECIFICATION

(11) **EP 4 626 724 B1**
(45) Date of publication and mention of the grant of the patent: **16.09.2026**
(21) Application number: 23821131.2
(22) Date of filing: 29.11.2023
(51) Int. Cl.: B60H 1/00, B60H 1/14, F16K 11/085, F16K 27/00

(54) **ELECTRIC VEHICLE THERMAL MANAGEMENT**
WÄRMEVERWALTUNG FÜR ELEKTROFAHRZEUG
GESTION THERMIQUE DE VÉHICULE ÉLECTRIQUE

(30) Priority: 29.11.2022 GB 202217872
(43) Date of publication of application: 08.10.2025
(73) Proprietor: Jaguar Land Rover Limited, Coventry, Warwickshire CV3 4LF (GB)
(72) Inventor: JACKSON, Graham, Coventry Warwickshire CV3 4LF (GB); SMITH, Robert, Coventry Warwickshire CV3 4LF (GB); KRISHNASAMY, Jacob, Coventry Warwickshire CV3 4LF (GB); RUSSELL, Alexander, Coventry Warwickshire CV3 4LF (GB); CRAWFORD, Lee, Coventry CV3 4LF Warwickshire (GB)
(74) Representative: Jaguar Land Rover Patents Department
(86) International application number: PCT/EP2023/083505
(87) International publication number: WO 2024/115552

(56) References cited:
- WO-A1-2021/122949
- US-A1- 2020 171 914
- US-A1- 2020 353 790
- US-A1- 2021 402 844
- US-A1- 2022 001 717

## Description

### TECHNICAL FIELD

The present disclosure relates to electric vehicle thermal management. More particularly, but not exclusively, the present disclosure relates to a control system for a thermal management system for an electric vehicle. Aspects of the invention relate to a control system, a thermal management system, an electric vehicle and a method of thermal management in an electric vehicle.

### BACKGROUND

It is known to provide an electric vehicle with a thermal management system to manage the temperature of vehicle components, such as a traction battery and electric drive unit. A liquid coolant is circulated within a thermal management system to manage the thermal load on the vehicle components. The thermal management system typically comprises one or more heat exchangers for controlling the temperature of the coolant to provide cooling and heating, as required. A plurality of valves are provided to control the coolant supply to the heat exchangers within the thermal management system. Different actuators are required for the different valves to provide appropriate operating characteristics for each valve.

US 2021/402844 A1 discloses a thermal management system for a vehicle, and more particularly, to a thermal management system for a vehicle which adjusts a temperature of a battery module by use of one chiller that performs heat exchange between a refrigerant and a coolant and improves heating efficiency by use of waste heat generated from an electrical component.

It is an aim of the present invention to address one or more of the disadvantages associated with the prior art.

### SUMMARY OF THE INVENTION

Aspects and embodiments of the invention provide a control system for controlling a control valve apparatus according to claim 1, a thermal management system according to claim 11, an electric vehicle according to claim 12 and a method for controlling a control valve apparatus according to claim 13 as described below and as claimed in the appended claims.

According to an aspect of the present invention there is provided a control system for controlling a control valve apparatus of an electric vehicle thermal management system, the electric vehicle thermal management system comprising: a battery unit; a first heat exchanger; an electric drive unit; a second heat exchanger; a crossflow valve unit; and a coolant network for supplying coolant to the battery unit, the first heat exchanger, the electric drive unit, the second heat exchanger and the crossflow valve unit, wherein the crossflow valve unit is configured to control coolant flow through the coolant network by partitioning the coolant network into one or more network configurations, the control system comprising one or more processors collectively configured to: receive data relating to a vehicle operating condition; determine a crossflow valve control signal (CS2) in dependence on the received data, the crossflow valve control signal configured to control the crossflow valve unit such that the network configuration of the coolant network comprises a first coolant circulation loop containing the battery unit and a second coolant circulation loop containing the first heat exchanger, the electric drive unit and the second heat exchanger; output the crossflow valve control signal (CS2) to the crossflow valve unit.

The control system is provided to control a control valve apparatus of an electric vehicle thermal management system. The control system may therefore control the circulation of coolant to provide cooling of vehicle systems, such as a battery and/or electric drive unit(s). The coolant is typically a liquid coolant. The thermal management system comprises a coolant network that may be partitioned into different configurations.

The control system is configured to receive data (for example from sensors SL1, ST1, S2, S3, S4) relating to a vehicle operating system.

Data may be received from sensors associated with the vehicle, such as a coolant temperature sensor or a coolant level sensor, and/or from other control signals derived from other vehicle functions. The received data may be received directly from the sensor or another vehicle component or may be routed through intermediate components before being received at the control system. The control system is configured to determine a crossflow valve control signal to control the crossflow valve and to output the crossflow valve control signal to **the** crossflow valve unit.

The control system comprises one or more controllers collectively comprising at least one electronic processor having an electrical input for receiving an input signal; and at least one memory device electrically coupled to the at least one electronic processor and having instructions stored therein; and wherein the at least one electronic processor is configured to access the at least one memory device and execute the instructions thereon so as to: receive data relating to the vehicle operating condition, determine the crossflow valve control signal and output the crossflow valve signal to the crossflow valve unit.

The crossflow valve unit may be a mechanical unit that is actuated by a separate actuator, which receives the crossflow valve control signal from the control system. The crossflow valve unit may be a mechanical unit that is actuated by a separate actuator, which receives the crossflow valve control signal from the control system. The electric vehicle thermal management system comprises a crossflow actuator configured to actuate the crossflow valve and the crossflow valve signal may be received by the crossflow actuator to control the crossflow valve.

The crossflow valve unit comprises a first crossflow valve and a second crossflow valve, the first and second crossflow valves being rotary valves that are offset from each other along a crossflow valve unit axis and being configured to be operated by the crossflow actuator.

Within the electric vehicle thermal management system the first coolant circulation loop may comprise a battery supply conduit for supplying coolant to the battery, a battery bypass conduit for bypassing coolant from the battery and a battery bypass control valve configured to control the flow of the coolant through the battery supply conduit and/or the battery bypass conduit; and the second coolant circulation loop comprises a heat exchanger conduit for supplying coolant to the second heat exchanger, a heat exchanger bypass conduit for bypassing coolant from the second heat exchanger and a second heat exchanger bypass control valve configured to control the proportion of the coolant that flows through the heat exchanger supply conduit and/or the heat exchanger bypass conduit and the control system may be configured to determine one or more control signals (CS1, CSn) in dependence on the received data to control the bypass control valve and/or second heat exchanger bypass control valve.

The electric vehicle thermal management system may comprise an actuator configured to actuate the battery bypass control valve and the second heat exchanger bypass control valve and the one or more control signals may comprise an actuator control signal to control the battery bypass control valve and the second heat exchanger bypass control valve.

The one or more control signals may be configured to: control the battery bypass control valve between a bypass position in which coolant flows through the battery bypass conduit and a flow position in which coolant flows through the battery conduit and blended mode positions in which coolant flows through the battery supply conduit and the battery bypass conduit; and; control the second heat exchanger bypass control valve between a flow position in which coolant flows through the second heat exchanger supply conduit and a bypass position in which coolant flows through the heat exchanger bypass conduit and blended mode positions in which coolant flows through the heat exchanger supply conduit and the heat exchanger bypass conduit.

The one or more control signals may be configured to control the battery bypass control valve to its bypass position and to control the second heat exchanger bypass control valve to a blended mode position.

The one or more control signals may be configured to control the battery bypass control valve to its flow position and to control the second heat exchanger bypass control valve to its bypass position. Such an operating mode may enable heat recovery from the electric drive unit to the vehicle cabin.

The one or more control signals may be configured to control the first heat exchanger to transfer heat to a vehicle cabin.

The electric thermal management system may comprise a coolant heater in the first coolant loop and the one or more control signals may be configured to control the coolant heat to supply heat to the coolant in order to supply heat to the battery unit.

The one or more control signals may be configured to control the battery bypass control valve to its flow position and to control the second heat exchanger bypass control valve to a blended mode position.

The electric vehicle thermal management system may comprise a first pump within the first coolant loop for circulating coolant through the first coolant loop and may comprise a second pump within the second coolant loop for circulating coolant through the second coolant loop.

According to a further aspect of the present invention there is provided an electric vehicle thermal management system comprising a control system. The control system may of the type described herein.

According to a still further aspect of the present invention there is provided an electric vehicle comprising a control system as described herein.

According to a further aspect of the present invention there is provided a method for controlling a control valve apparatus of an electric vehicle thermal management system, the electric vehicle thermal management system comprising: a battery unit; a first heat exchanger; an electric drive unit; a second heat exchanger; a crossflow valve unit; and a coolant network for supplying coolant to the battery unit, the first heat exchanger, the electric drive unit, the second heat exchanger and the crossflow valve unit, wherein the crossflow valve unit is configured to control coolant flow through the coolant network by partitioning the coolant network into one or more network configurations, the method comprising: receiving data relating to a vehicle operating condition; determining a crossflow valve control signal (CS2) in dependence on the received data, the crossflow valve control signal configured to control the crossflow valve unit such that the network configuration of the coolant network comprises a first coolant circulation loop containing the battery unit and a second coolant circulation loop containing the electric drive unit, the first heat exchanger and the second heat exchanger; outputting the crossflow valve control signal (CS2) to the crossflow valve unit.

Examples useful for understanding the present invention are described below.

According to an examples useful for understanding the present invention there is provided a control valve apparatus for controlling the circulation of a coolant in an electric vehicle thermal management system; the control valve apparatus comprising: a battery bypass control valve configured to control the flow of the coolant through a battery supply conduit and/or a battery bypass conduit; a environmental heat dissipator control valve configured to control the proportion of the coolant that flows through a heat exchanger supply conduit and/or a heat exchanger bypass conduit; and an actuator configured to actuate the battery bypass control valve and the environmental heat dissipator control valve.

The electric vehicle comprises a battery and at least one electric drive unit. The battery may be a high voltage (HV) battery. At least in certain examples, the battery is a traction battery for supplying power to at least one traction motor for propelling the electric vehicle. The battery bypass conduit is configured to cause at least some of the coolant to bypass the battery, i.e., to be diverted around the battery. The electric vehicle thermal management system comprises a heat exchanger. The heat exchanger bypass conduit is configured to cause at least some of the coolant to bypass the heat exchanger, i.e., to be diverted around the heat exchanger. At least in certain examples, the environmental heat dissipator control valve is configured to control the proportion of the coolant that flows through the heat exchanger and the proportion that flows through the heat exchanger bypass conduit (thereby bypassing the heat exchanger). The environmental heat dissipator control valve may be continuously variable. For example, the environmental heat dissipator control valve may be continuously variable to adjust the proportion of the coolant supplied to the heat exchanger supply conduit and/or the heat exchanger bypass conduit. The heat exchanger may, for example, be a low temperature heat exchanger. The heat exchanger may be configured to reject thermal energy from the coolant after circulation through the at least one electric drive unit.

The control valve apparatus is provided to control the circulation of coolant to provide cooling of vehicle systems, such as a battery and/or electric drive unit(s). The coolant is typically a liquid coolant. The battery bypass control valve and the environmental heat dissipator control valve are actuated together to control the circulation of the coolant. The actuator is configured to actuate both the battery bypass control valve and the environmental heat dissipator control valve. In use, the battery bypass control valve and the environmental heat dissipator control valve are actuated in unison by the actuator. At least in certain examples, the relationship between the battery bypass control valve and the environmental heat dissipator control valve is fixed. At least in certain examples, the dual function of the actuator may reduce the complexity of the control valve apparatus.

**The** actuator may comprise a drive member configured to actuate the battery bypass control valve and the environmental heat dissipator control valve. **The** battery bypass control valve and the environmental heat dissipator control valve may both be connected to the drive member. The use of the same drive member helps to ensure that the battery bypass control valve and the environmental heat dissipator control valve operate together in a predetermined manner.

The battery bypass control valve is configured to control the flow of the coolant through the battery bypass conduit. The battery bypass control valve may comprise a valve operable to open and close the battery bypass conduit. The bypass is selectively configured in an open state and a closed state. The battery bypass control valve is operable to open and close the battery bypass conduit, thereby selectively enabling and disabling coolant bypassing the battery.

The battery bypass control valve may comprise a first valve member operable to open and close the battery bypass control valve. The first valve member may be moveable between a first position to open the battery bypass control valve and a second position to close the battery bypass control valve. The first valve member may translate, for example along a linear path, to open and close the battery bypass control valve. Alternatively, the first valve member may rotate, for example about a rotational axis, to open and close the battery bypass control valve. For example, the battery bypass control valve may comprise a first rotary valve member rotatable to open and close the battery bypass control valve. The actuator may be operable to rotate the first rotary valve member.

The environmental heat dissipator control valve may be connected to the heat exchanger bypass conduit and the heat exchanger supply conduit. The heat exchanger bypass conduit and the heat exchanger supply conduit may be connected to inlets of the environmental heat dissipator control valve. An outlet of the environmental heat dissipator control valve may be connected to a coolant pump. Alternatively, the heat exchanger bypass conduit and the heat exchanger supply conduit may be connected to outlets of the environmental heat dissipator control valve. An inlet of the environmental heat dissipator control valve may be connected to a coolant supply conduit, for example connected to an outlet of a coolant pump. In use, the proportional valve may control the proportion of the coolant supplied to the heat exchanger bypass conduit and to the heat exchanger. The environmental heat dissipator control valve may, for example, comprise a three-way proportional valve.

The environmental heat dissipator control valve may comprise a second valve member. The second valve member may be moveable to control the proportion of the flow of coolant supplied to the heat exchanger bypass conduit and the heat exchanger. The second valve member may be moveable to adjust the extent to which the valve ports of the environmental heat dissipator control valve are open/ closed. The second valve member may translate, for example along a linear path. Alternatively, the second valve member may rotate, for example about a rotational axis. The environmental heat dissipator control valve may comprise a second rotary valve member rotatable to provide proportional control of flow of the coolant through the heat exchanger bypass conduit.

At least in certain examples, the actuator is operable to displace the first and second valve members. The actuator may, for example, be configured to rotate the first and second rotary valve members.

The first and second rotary valve members may be rotatable about a rotational axis. The first and second rotary valve members may be offset from each other along the rotational axis.

The first rotary valve member may be rotatable rotate about a first axis; and the second rotary valve member may be rotatable about a second axis. The first axis and the second axis may be offset from each other. The first axis and the second axis may be parallel to each other, for example. Alternatively, the first and second rotary valve members may rotate about a common axis. The first axis and the second axis may be co-axial. The first and second rotary valve members may be offset along the common axis.

The drive member may be a drive shaft. The first and second rotary valve members may be connected to the drive shaft. The first and second rotary valve members may be fastened to the drive shaft.

The first and second valve members may be connected to the drive member. The first and second valve members may be formed integrally.

The actuator may comprise an electromechanical actuator, such as an electric motor or a solenoid. The actuator may comprise a linear actuator. Alternatively, the actuator may comprise a rotary actuator. The operating state of the battery bypass control valve and the environmental heat dissipator control valve may be controlled in dependence on an angular position of the rotary actuator.

The battery bypass control valve may be configured to close the battery bypass conduit when the rotary actuator is in a first angular range. The battery bypass control valve may be configured to open the battery bypass conduit when the rotary actuator is in a second angular range. The first and second angular ranges may be offset from each other, i.e., the first and second angular ranges may be non-overlapping.

The rotation of the rotary actuator in a first direction in the first angular range may progressively increase the proportion of the coolant flowing through the heat exchanger bypass conduit. As the proportion of the coolant flowing through the heat exchanger bypass conduit increases, there is a corresponding decrease in the proportion of the coolant supplied to the heat exchanger.

The rotation of the rotary actuator in a second direction (opposite to the first direction) in the first angular range may progressively decrease the proportion of the coolant flowing through the heat exchanger bypass conduit. As the proportion of the coolant through the heat exchanger bypass conduit decreases, there is a corresponding increase in the proportion of the coolant supplied to the heat exchanger.

The rotation of the rotary actuator in the first direction in the second angular range progressively decreases the proportion of the coolant flowing through the heat exchanger bypass conduit. As the proportion of the coolant through the heat exchanger bypass conduit increases, there is a corresponding decrease in the proportion of the coolant supplied to the heat exchanger.

The control valve apparatus may comprise at least one crossflow valve configured selectively to control the connection between a first coolant circulation loop and a second coolant circulation loop.

The at least one crossflow valve may be configured selectively to connect the first and second coolant circulation loops. The at least one crossflow valve may be configured selectively to connect the first and second coolant circulation loops in series. The at least one crossflow valve may be operable selectively to connect the first and second coolant circulation loops in series to form a single, continuous circulation loop.

According to a further examples useful for understanding the present invention there is provided a thermal management system for an electric vehicle comprising a control valve apparatus. The control valve apparatus may of the type described herein.

The thermal management system may comprise a battery supply conduit and a battery bypass conduit. The battery bypass control valve may be configured to control the flow of the coolant through the battery bypass conduit and/or the battery supply conduit.

The thermal management system may comprise a heat exchanger supply conduit and a heat exchanger bypass conduit. The environmental heat dissipator control valve is configured to control the proportion of the coolant that flows through the heat exchanger supply conduit and/or the heat exchanger bypass conduit.

The thermal management system may comprise a first coolant circulation loop and a second coolant circulation loop. The first and second coolant circulation loops may be independent of each other. In other words, the first and second coolant circulation loops may be separate from each other. Alternatively, the thermal management system may be configured selectively to connect the first and second coolant circulation loops. For example, at least one crossflow valve may be provided selectively to connect the first coolant circulation loops to the second coolant circulation loop. The at least one crossflow valve may be operable selectively to connect the first and second coolant circulation loops in series to form a single, continuous circulation loop.

The control valve apparatus may comprise at least one crossflow valve configured selectively to control the connection between a first coolant circulation loop and a second coolant circulation loop.

The control valve apparatus has been described herein with particular reference to a environmental heat dissipator control valve. It will be understood that the control valve apparatus may be configured to provide a variable flow control valve. The variable flow control valve may be operated to controllably vary the flow through the control valve apparatus. According to an examples useful for understanding the present invention there is provided a control valve apparatus for controlling the circulation of a coolant in an electric vehicle thermal management system; the control valve apparatus comprising: a battery bypass control valve configured to control the flow of the coolant through a battery supply conduit and/or a battery bypass conduit; a variable control valve configured to control the flow of the coolant through a heat exchanger supply conduit and/or a heat exchanger bypass conduit; and an actuator configured to actuate the battery bypass control valve and the variable control valve. The variable control valve may be continuously variable. For example, the variable control valve may be continuously variable to adjust the flow of the coolant through the heat exchanger supply conduit and/or the heat exchanger bypass conduit. The actuator may comprise a drive member configured to actuate the battery bypass control valve and the variable control valve.

According to a still further examples useful for understanding the present invention there is provided an electric vehicle comprising a control valve apparatus as described herein.

The vehicle may comprise an electric powertrain and/or a traction battery. The thermal management system may be configured to manage thermal properties of the at least one electric drive unit and/or the traction battery. The control valve apparatus may be configured to control the circulation of a coolant in the thermal management system.

According to a further examples useful for understanding the present invention there is provided a thermal management system for a vehicle that includes an electric traction motor, a traction battery to power the traction motor, an environmental heat dissipator, a heat exchanger for controlling the temperature in a vehicle cabin for vehicle occupants and a coolant flow circuit to circulate coolant through the battery and motor, the coolant flow circuit comprising first and second coolant pumps and first and second valve units, wherein the first valve unit controls a bypass of the coolant flow circuit through the battery and a bypass around the environmental heat dissipator; and the second valve unit controls first and second coolant flow loops of the coolant flow circuit providing three modes of operation: in a first mode, the first and second loops are independent, the first loop comprising the first coolant pump, the battery, the second valve unit and the heat exchanger, the second loop comprising the second coolant pump, the second valve unit, the traction motor and the environmental heat dissipator, in a second mode, the first and second loops are connected in series with one another; and in a third mode, the first loop comprising the first coolant pump, the battery, and the second valve unit, the second loop comprising the second coolant pump, the heat exchanger the second valve unit, the traction motor and the environmental heat dissipator.

According to a further examples useful for understanding the present invention there is provided a non-transitory computer-readable medium having a set of instructions stored therein which, when executed, cause a processor to perform the method(s) described herein. Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit' will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used.

### BRIEF DESCRIPTION OF THE DRAWINGS

One or more embodiments of the invention will now be described, by way of example only, with reference to the accompanying drawings, in which:
Figure 1 shows an electric vehicle comprising a thermal management system having a control valve apparatus in accordance with an embodiment of the present invention;
Figure 2 shows an example schematic representation of the thermal management system shown in Figure 1;
Figure 3 shows a partial exploded view of the control valve apparatus provided in the thermal management system;
Figures 4A to 4D illustrate operation of a battery bypass control valve provided in the control valve apparatus shown in Figure 3;
Figures 5A to 5D illustrate operation of a heat exchanger bypass control valve provided in the control valve apparatus shown in Figure 3:
Figure 6 is a graph to illustrate operation of the battery bypass control valve in Figure 4A to 4Dand the heat exchanger control valve in Figures 5A to 5D;
Figures 7A to 7C illustrate operation of a first crossflow valve provided in the control valve apparatus shown in Figure 3;
Figures 8A to 8C illustrate operation of a second crossflow valve provided in the control valve apparatus shown in Figure 3;
Figure 9 shows a schematic representation of a control unit for controlling operation of the valve control apparatus in accordance with an embodiment of the present invention;
Figure 10 shows the thermal management system in accordance with an embodiment of the present invention in a first operating mode;
Figure 11 shows the thermal management system in accordance with an embodiment of the present invention in a second operating mode;
Figure 12 shows the thermal management system in accordance with an embodiment of the present invention in a third operating mode;

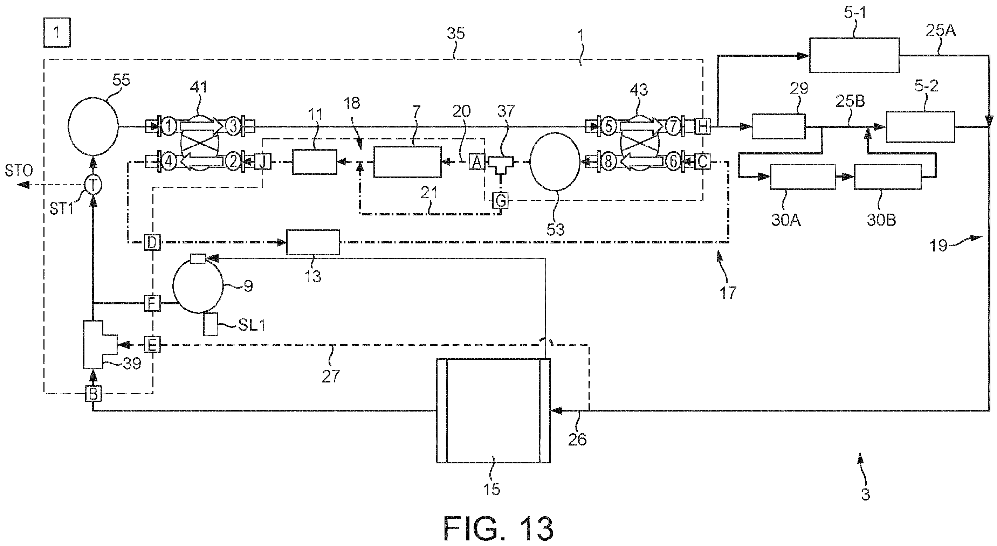

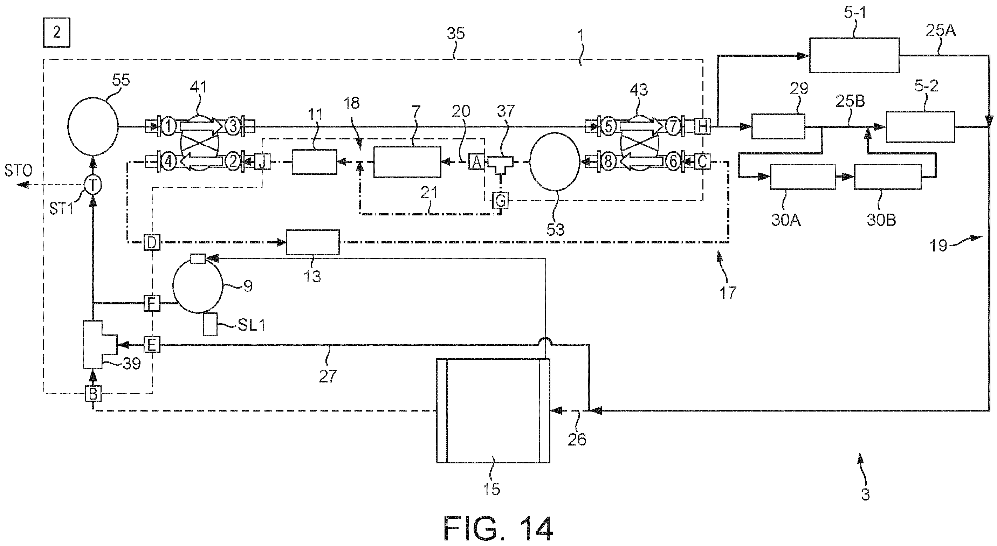

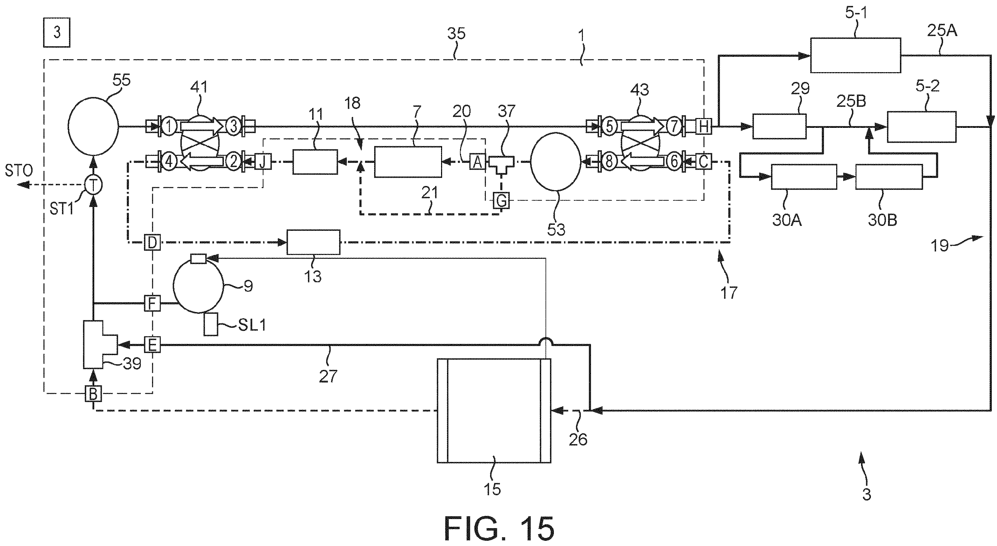

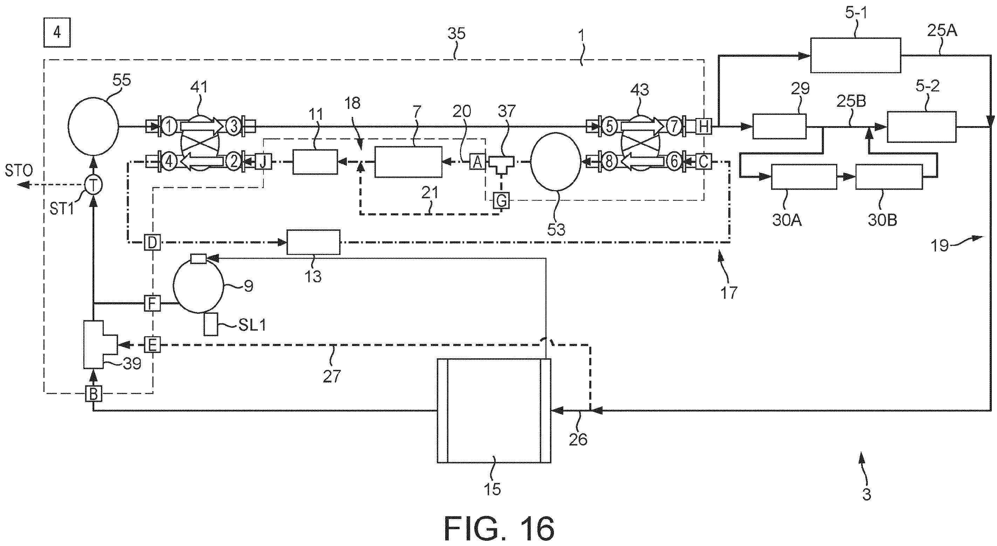

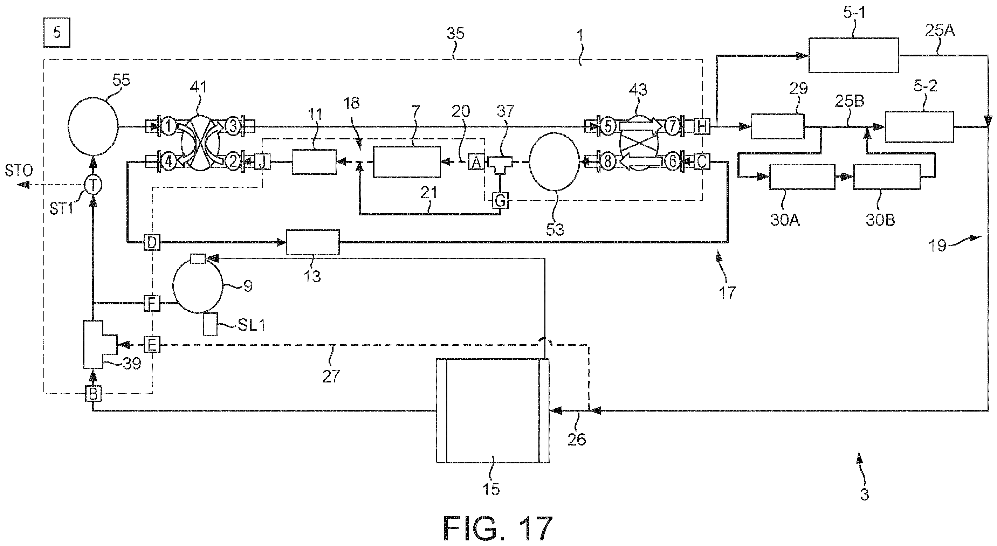

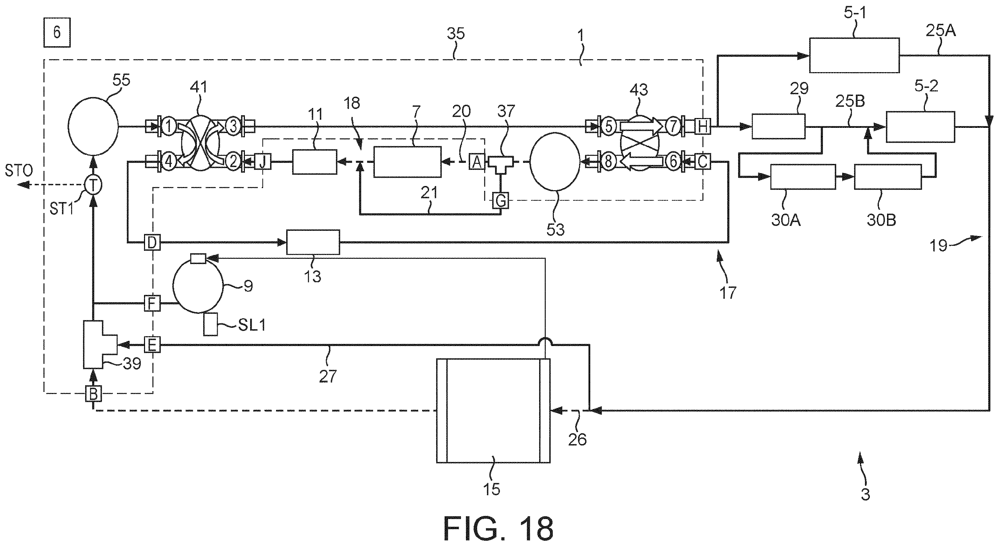

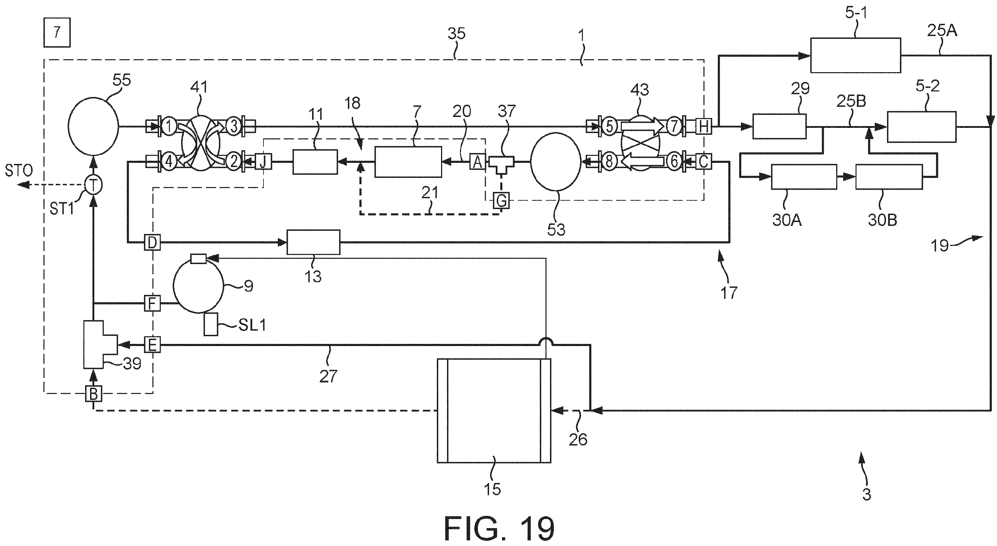

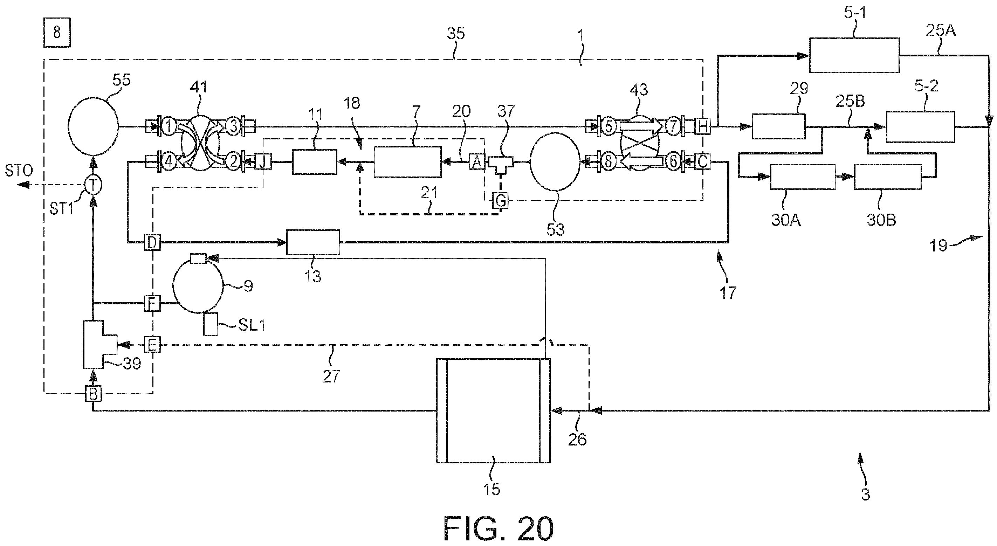

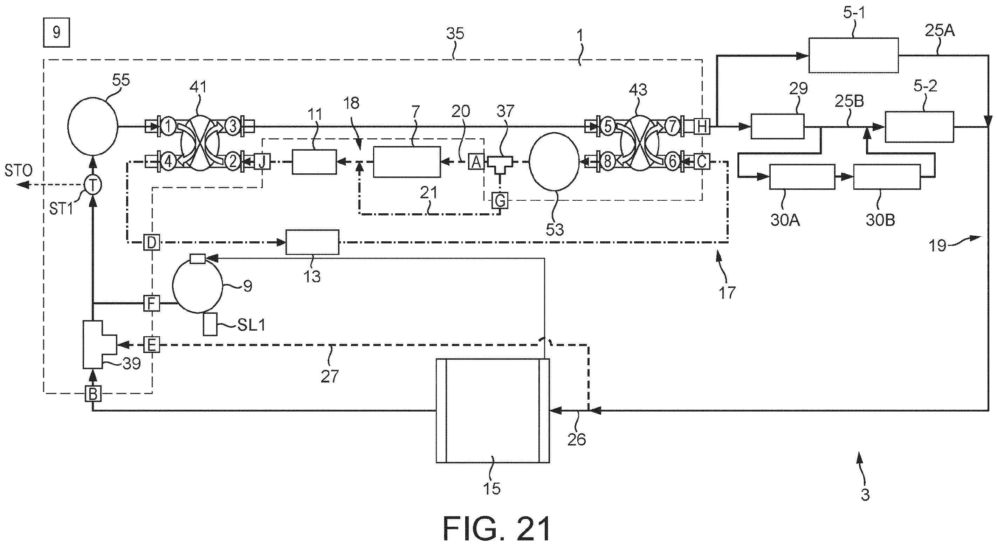

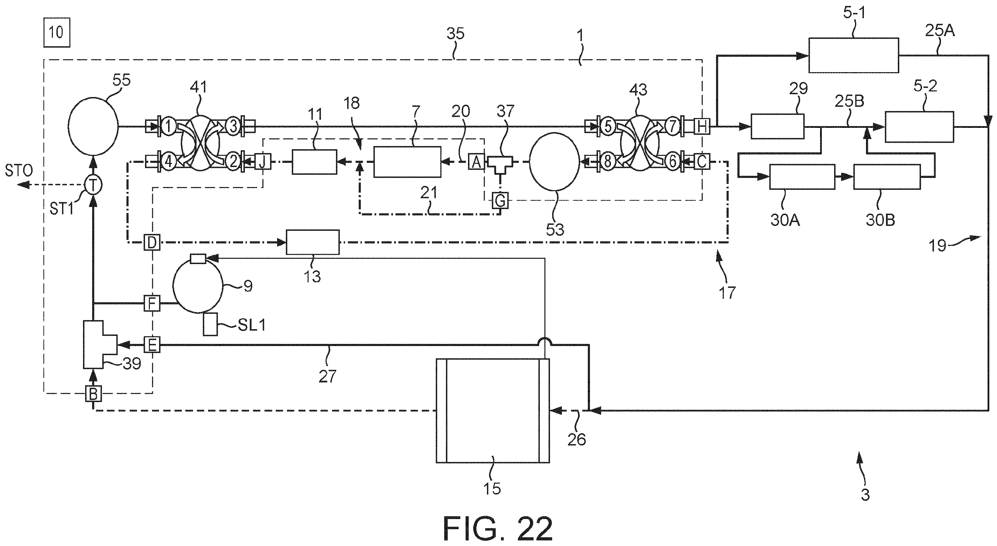

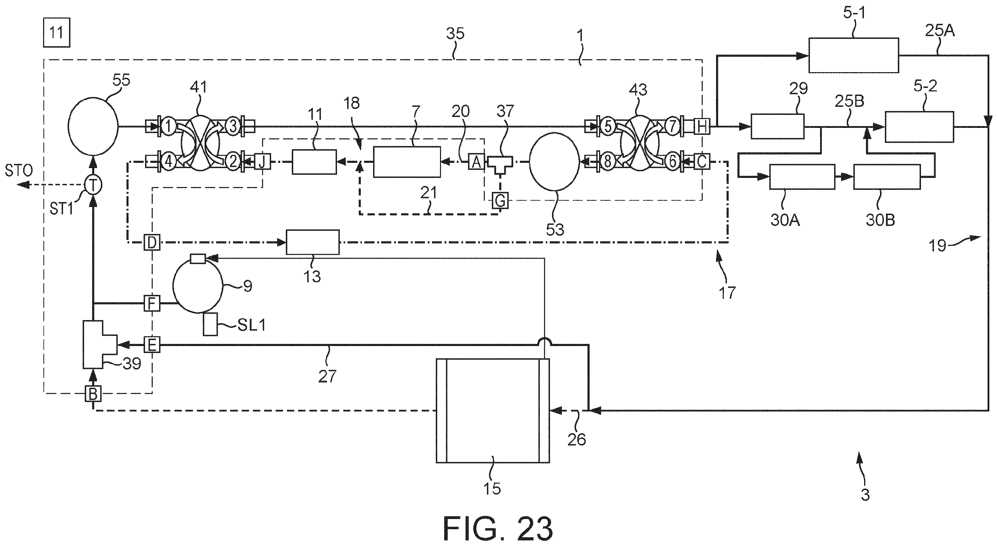

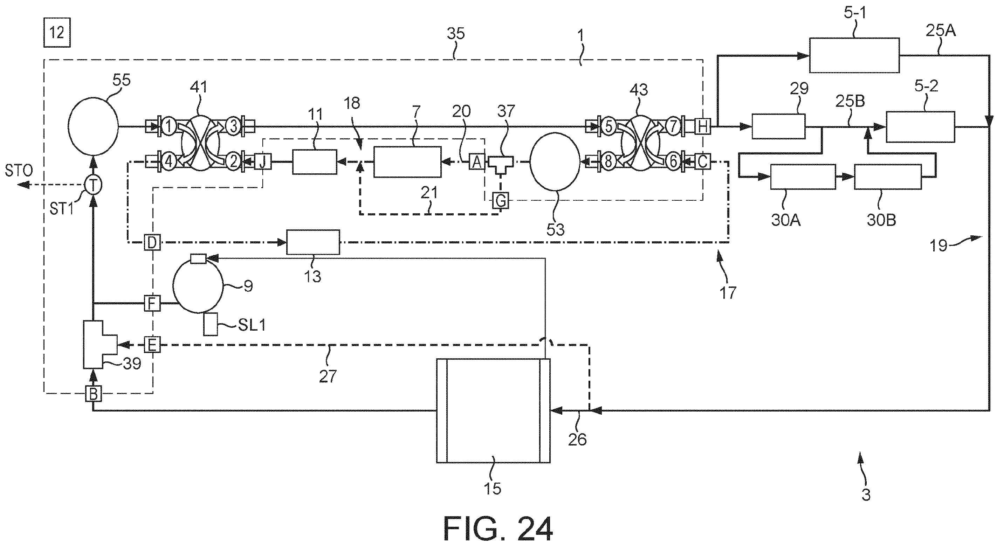

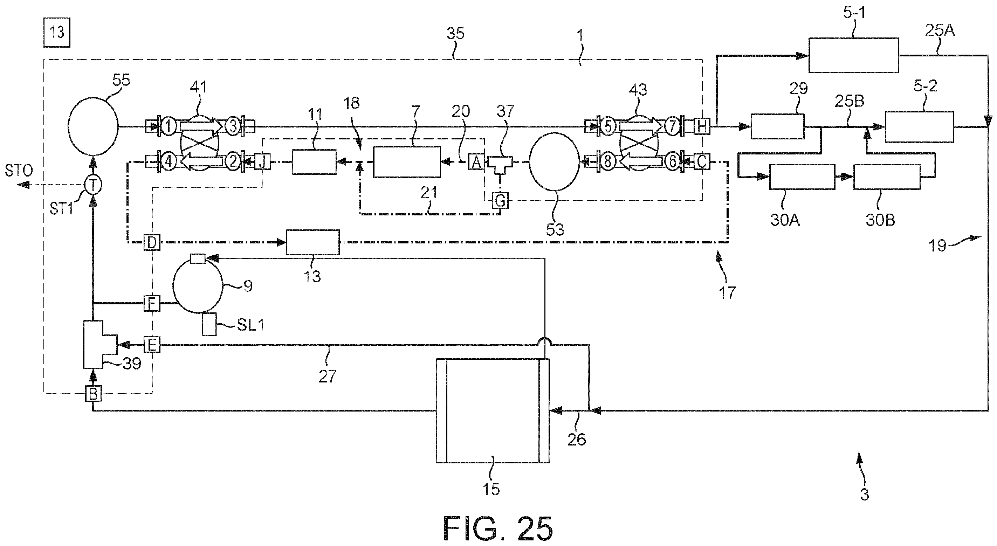

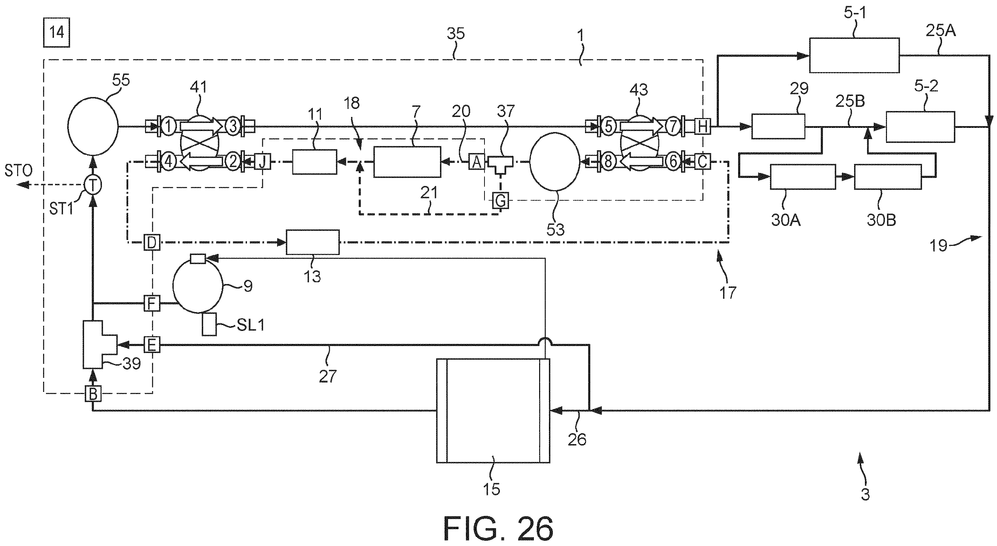

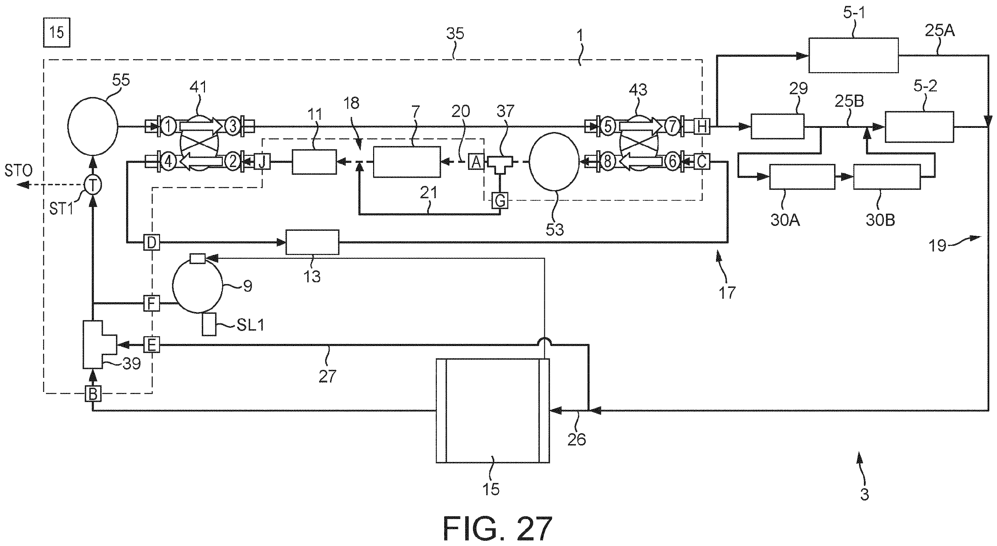

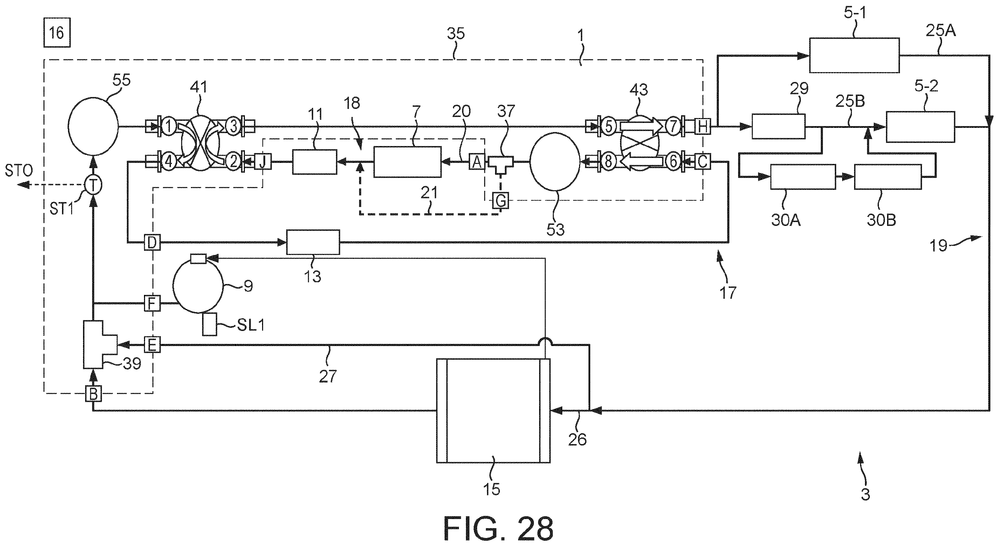

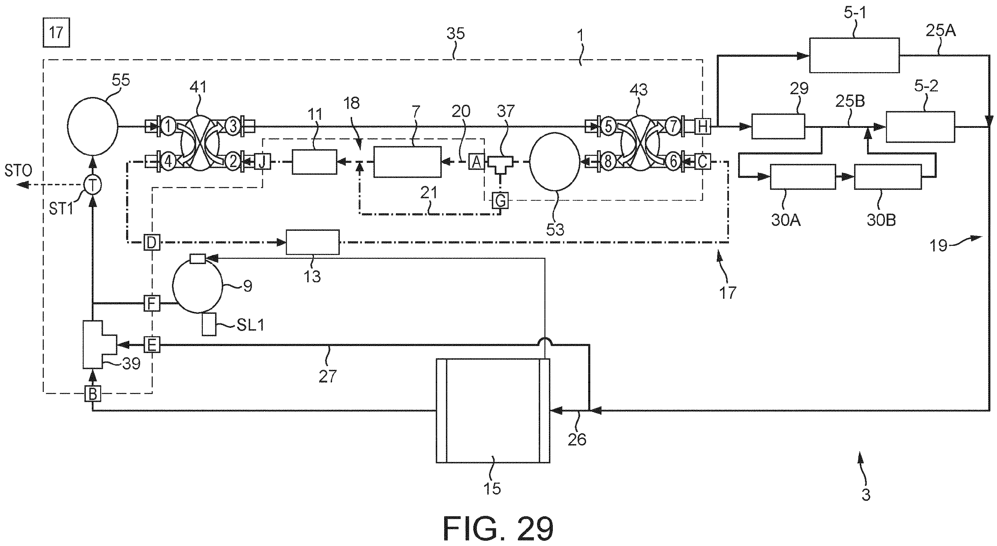

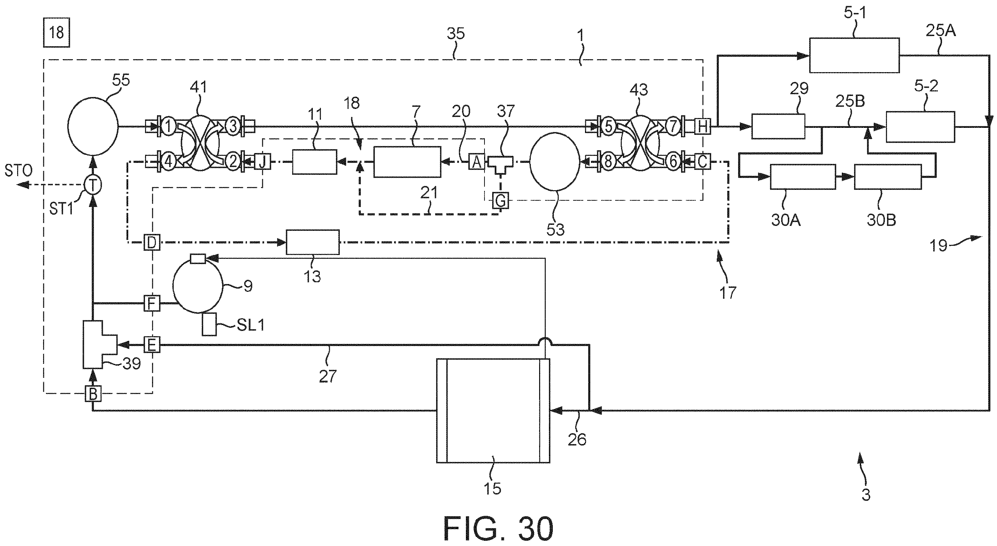

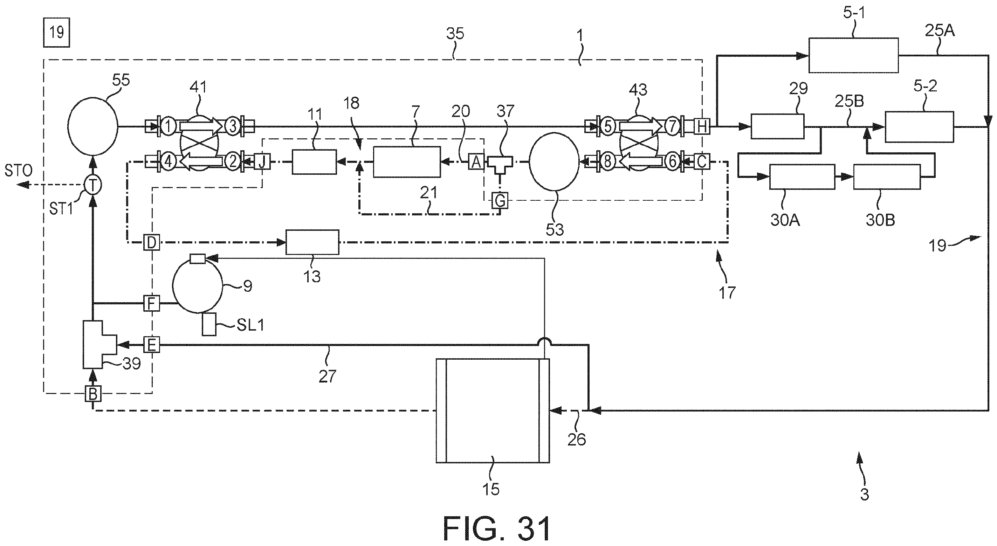

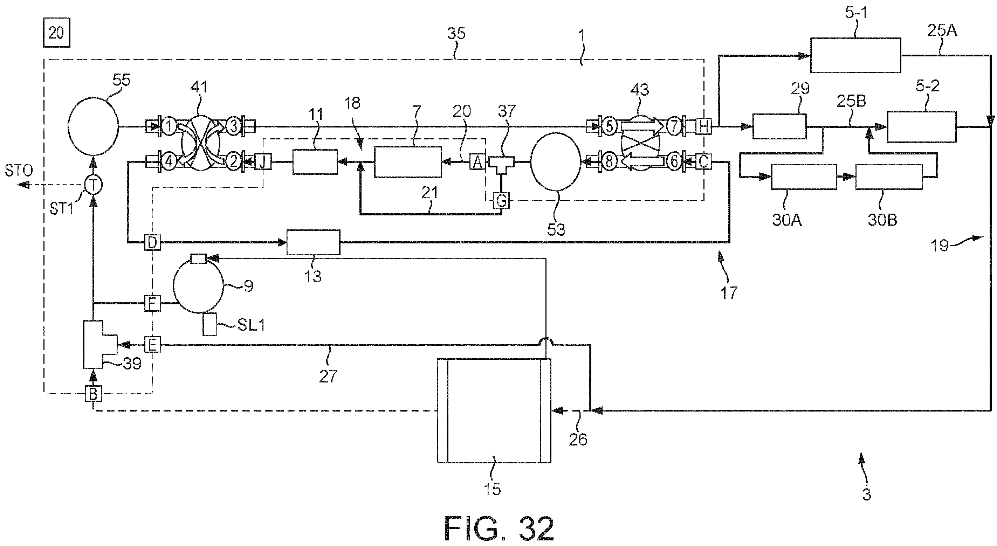

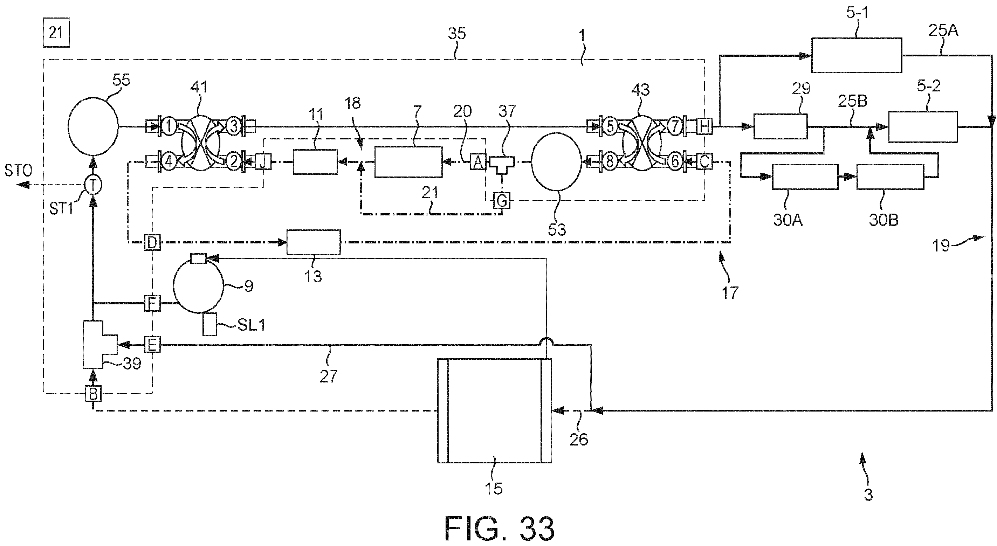

Figures 13 to 33 show the thermal management system in accordance with an embodiment of the present invention in various discrete operating modes;
Figure 34 shows an example valve body provided in the control valve apparatus; and
Figure 35 shows an alternative view of the valve body of Figure 34.

### DETAILED DESCRIPTION

A control valve apparatus 1 for controlling the circulation of a coolant in a thermal management system 3 in accordance with an embodiment of the present invention is described herein with reference to the accompanying Figures.

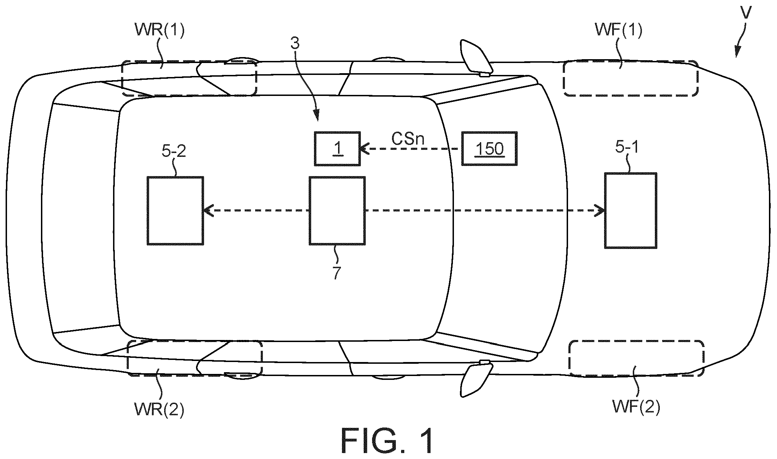

In Figure 1, the thermal management system 3 is provided in a road vehicle V, such as an automobile. The vehicle V comprises at least one electric drive unit (EDU) 5-n and a battery unit 7. The or each electric drive unit 5-n comprises one or more electric traction motors for propelling the vehicle V. The battery unit 7 is a high voltage (HV) battery unit and is configured to supply electrical current to the at least one drive unit 5-n. In the present embodiment, the vehicle V comprises a front electric drive unit 5-1 for driving the front wheels WF of the vehicle V; and a rear electric drive unit 5-2 for driving the rear wheels WR of the vehicle V. In use, the front and rear electric drive units 5-1, 5-2 are both powered by the battery unit 7. The front electric drive unit 5-1 may comprise a single electric traction motor configured to drive both front wheels WF. Similarly, the rear electric drive units 5-2 may comprise a single electric traction motor configured to drive both rear wheels WR. Alternatively, each of the front and rear electric drive units 5-1, 5-2 may comprise separate electric traction motors not shown configured to drive respective wheels of the vehicle V. It will be understood that the thermal management system 3 may be used in a vehicle V having a single electric drive unit 5-1, for example driving the front or rear wheels WF, WR.

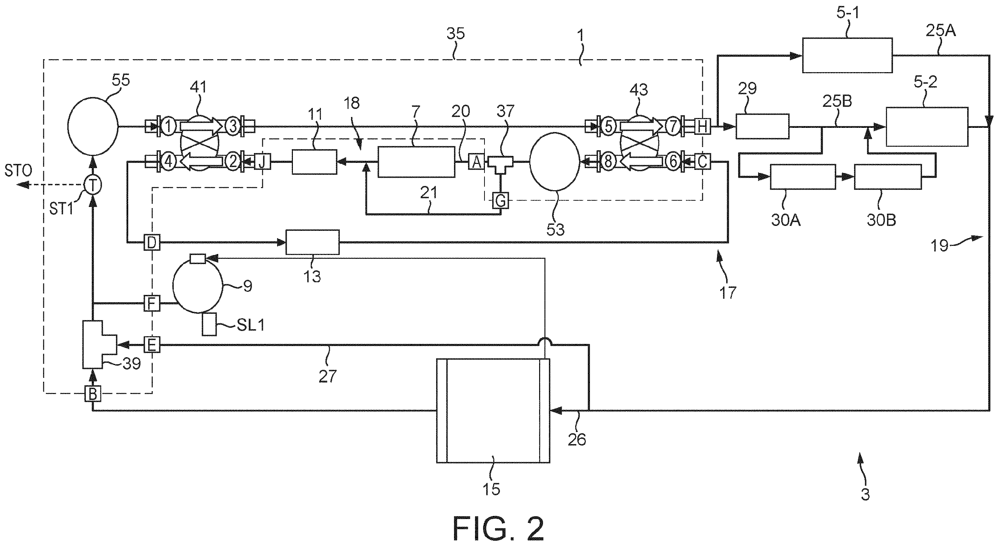

A schematic representation of the thermal management system 3 comprising a coolant network 17, 18, 19 is shown in Figure 2. The control valve apparatus 1 is configured to control the circulation of the coolant to manage a thermal load of the front electric drive units 5-1, the rear electric drive unit 5-2, the battery unit 7 and the vehicle cabin for occupant comfort. The thermal management system 3 comprises a coolant heater 11; a first heat exchanger 13; and a second heat exchanger 15. The coolant heater 11 is configured to heat the coolant, for example to provide fast warm-up of a cabin (not shown) of the vehicle V. The coolant heater 11 in the present embodiment Is a high voltage (HV) heater. The first heat exchanger 13 is bi-directional and can be configured selectively to cool the coolant supplied to the battery unit 7, or to supply heat from the outside environment to heat the coolant. A refrigerant can be pumped to a refrigerant side of the first heat exchanger 13 to cause the first heat exchanger 13 to operate as a chiller. The supply of refrigerant can be halted to reduce or prevent heat exchange in the first heat exchanger 13. The second heat exchanger 15 is a low temperature heat exchanger (or a low temperature radiator) and is operative to reject heat from the coolant.

The control valve apparatus 1 comprises a first pump 53 and a second pump 55. A degas tank 9 is provided for the second heat exchanger 15, which is also referred to as an environmental heat dissipator. A coolant level sensor SL1 may be provided in the degas tank 9 to measure the level of the coolant. The coolant network 17, 18, 19 comprises a group of at least some of the above described components, which are fluidically linked. The coolant network of the thermal management system 3 can be partitioned into one or more network configurations. For example, the coolant network could comprise a first coolant loop 17; a second coolant loop 18, and a third coolant loop 19. A liquid coolant is circulated through the first second, and third coolant loops 17, 18, 19 to perform cooling of the front and rear electric drive units 5-1, 5-2 and the battery unit 7. At least one coolant temperature sensor ST1 is provided for measuring the temperature of the coolant. In the present embodiment, the coolant temperature sensor ST1 is provided at an inlet to the second pump 55. The coolant temperature sensor ST1 measures the temperature of the coolant supplied to the second pump 55. The coolant temperature sensor ST1 may be provided elsewhere in the thermal management system 3. An electric fan (not shown) may optionally be provided to circulate air over the second heat exchanger 15 to promote cooling of the coolant.

As described herein, the coolant network 17, 18, 19 may be selectively configured to comprise parallel second and third coolant loops 18, 19 or one large serial coolant loop where all three coolant loops are combined in series. In overview, the battery unit 7 exists in the second coolant loop 18 and the electric drive units 5-1, 5-2 exist in the third coolant loop 19. There may be additional components in any of the coolant loops as will be explained below. The coolant network 17, 18, 19 is configurable to either merge or partition the coolant supply between the battery unit 7 and the electric drive units 5-1, 5-2. In addition, and where the coolant network 17, 18, 19 is configured such that the second and third coolant loops 18, 19 are arranged in parallel, there are two configurations that place the first coolant loop 17 comprising the first heat exchanger 13 in series with either the second coolant loop 18 or the third coolant loop 19.

The second coolant circulation loop 18 is configured to supply coolant to the battery unit 7. The coolant heater 11 is plumbed in series with the battery unit 7 and in a portion of the coolant network 17, 18, 19 where it coexists in the second coolant loop 18 with the battery unit 7. In the coolant network example shown in Figure 2, the first coolant loop 17 comprising the first heat exchanger 13 is also positioned in series with the second coolant circulation loop 18, although this is optionally dependant on the coolant network configuration. The coolant heater 11 is provided downstream of the battery unit 7 and, in use, is operative to heat the coolant. The first heat exchanger 13 is disposed upstream of the battery unit 7 in this example and, in use, can be configured to cool the coolant prior to introduction into the battery unit 7. The second coolant circulation loop 18 comprises a battery supply conduit 20, a battery bypass conduit 21, and a coolant heater bypass conduit 23. The battery supply conduit 20 can be selectively metered to control the supply of coolant to the battery 7. Likewise, the battery bypass conduit 21 can be selectively metered to control the supply of a remaining portion of coolant not supplied to the battery supply conduit 20. The operation of the battery bypass conduit 21 is described in more detail herein. The coolant heater 11 comprises an internal bypass in parallel to a heat exchanger portion of the coolant heater 11. The internal bypass allows a portion of the coolant to bypass the heat exchanger of the coolant heater 11. The internal bypass o he coolant heater 11 is provided to reduce a pressure drop which may result due to flow restrictions caused by the heat exchanger of the coolant heater 11.

The third coolant loop 19 is configured to supply coolant to the front and rear electric drive units 5-1, 5-2. The second heat exchanger 15 is plumbed in a portion of the coolant network where it always coexists in the third coolant loop 19 downstream of the front and rear electric drive units 5-1, 5-2. In use, the second heat exchanger 15 extracts, transfers or rejects thermal energy from the coolant flowing through it. As shown in Figure 2, the third coolant loop 19 comprises first and second branches 25A, 25B for conveying the coolant to the front and rear electric drive units 5-1, 5-2 respectively. The first and second branches 25A, 25B are permanently configured in parallel. The first and second branches 25A, 25B reconvene after the electric drive units 5-1, 5-2 and the coolant flow from both continues to the second heat exchanger 15. The third coolant loop 19 comprises a second heat exchanger supply conduit 26 for supplying coolant to the second heat exchanger 15; and a second heat exchanger bypass conduit 27 for selectively bypassing the second heat exchanger 15. As described herein, the control valve apparatus 1 according to the present embodiment provides proportional control of the coolant flow rate through the heat exchanger bypass conduit 27, thereby controllably increasing or decreasing the flow through the second heat exchanger 15. The third coolant loop 19 is configured to supply coolant to perform cooling of an electric power unit 29 associated with the front or rear electric drive unit 5-1, 5-2. The electric power unit 29 comprises inverter/power electronics. One or more electronic control units 30A, 30B may be provided for the advanced driver-assistance systems (ADAS). A portion of the coolant supplied to the second branch 25B of the third coolant loop 19 may be used to cool the one or more electronic control units 30A, 30B.

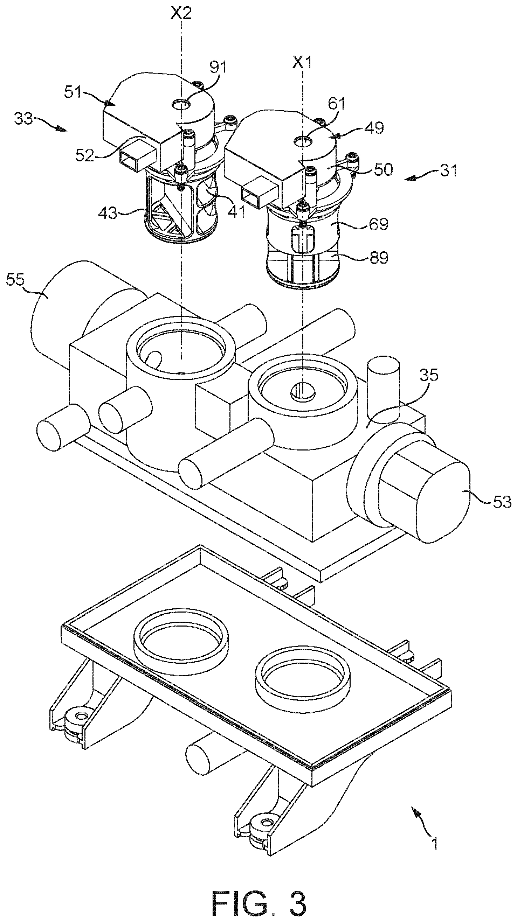

With reference to Figure 3, the control valve apparatus 1 comprises a first valve unit 31 or bypass valve unit and a second valve unit 33 or crossflow valve unit. In the present embodiment, the first and second valve units 31, 33 are combined in a single housing 35 (denoted by a dashed line in Figure 2). In a variant, the first and second valve units 31, 33 may be separate from each other. As described herein, the first and second valve units 31, 33 are operable independently of each other.

The first valve unit 31 comprises a battery bypass control valve 37 (see Figure 2) and a second heat exchanger bypass control valve 39 (also shown in Figure 2). As described herein, the battery bypass control valve 37 and the second heat exchanger bypass control valve 39 may be continuously variable. The battery bypass control valve 37 is disposed in series with the second coolant loop 18 and is configured to control the proportion of coolant flow between the battery bypass supply conduit 20 and the battery bypass conduit 21. Therefore, the bypass control valve 37 is operative to control the proportion of the coolant flow between the battery unit 7 and the battery bypass conduit 21. The second heat exchanger bypass control valve 39 is disposed in series with the third coolant loop 19 and is configured to control the proportion of coolant flow through the second heat exchanger supply conduit 26 and the second heat exchanger bypass conduit 27. Therefore, the proportional control valve 39 is operative to control the proportion of the coolant that flows through each of second heat exchanger 15 and the second heat exchanger bypass conduit 27. As described herein, the battery bypass control valve 37 and the second heat exchanger bypass control valve 39 can be configured in a plurality of bypass operating modes to configure the proportion of coolant being bypassed around either the battery unit 7 or the second heat exchanger 15. It should be noted that there is a bypass operating mode where no coolant is bypassed around the battery unit 7 or the second heat exchanger 15 as will be exemplified below. The battery bypass control valve 37 and the second heat exchanger bypass control valve 39 are rotary valves in the present embodiment, however, other types of valve are contemplated. As described herein, the battery bypass control valve 37 and the second heat exchanger bypass control valve 39 are configured to be operated together. The battery bypass control valve 37 and the second heat exchanger bypass control valve 39 are arranged in a stacked configuration. The battery bypass control valve 37 and the second heat exchanger bypass control valve 39 are offset from each other along a first axis X1 in Figure 3.

The second valve unit 33 comprises a first crossflow valve 41 and a second crossflow valve 43. The first and second crossflow valves 41, 43 are operative to selectively configure the coolant network by controlling the coolant flow through the first, second and third coolant loops 17, 18, 19. As described herein, the first and second crossflow valves 41, 43 can be configured in a plurality of crossflow operating modes to re-configure the connections of the coolant loops 17, 18, 19. The first and second crossflow valves 41, 43 in the present embodiment are operated together, preferably by a common actuator. The first crossflow valve 41 and the second crossflow valve 43 are arranged in a stacked configuration. The first and second crossflow valves 41, 43 are offset from each other along a second axis X2 in Figure 3. The first and second crossflow valves 41, 43 are rotary valves in the present embodiment, however, other types of valve are contemplated.

The control valve apparatus 1 comprises a first actuator 49, alternatively know as a bypass actuator, and a second actuator 51, alternatively known as a crossflow actuator. **The** first actuator 49 is provided to operate the first valve unit 31; and the second actuator 51 is provided to actuate the second valve unit 33. In the present embodiment, the first and second actuator 49, 51 are integrated into the control valve apparatus 1. The first actuator 49 comprises a first electric motor 50 and the second actuator 51 comprises a second electric motor 52. As shown in Figure 3, the first and second actuators 49, 51 are mounted directly to the housing 35 of the control valve apparatus 1.

The first pump 53 is disposed in a portion of the coolant network 17, 18, 19 in a position where it is always configured to pump the coolant in the second coolant circulation loop 18 to supply coolant to the battery unit 7. The second pump 55 is disposed in a portion of the coolant network 17, 18, 19 in a position where it is always configured to pump the coolant in the third coolant loop 19 to supply coolant to the front and rear electric drive units 5-1, 5-2. The first and second pumps 53, 55 are operable independently of each other. In the present embodiment, the first and second pumps 53, 55 are integrated into the control valve apparatus 1. As shown in Figure 3, the first and second pumps 53, 55 are mounted directly to the housing 35 of the control valve apparatus 1. By integrating the first and second pumps 53, 55 into the control valve apparatus 1, the need for ancillary conduits may be reduced or avoided. In a variant, the first pump 53 and/or the second pump 55 may be separate from the control valve apparatus 1.

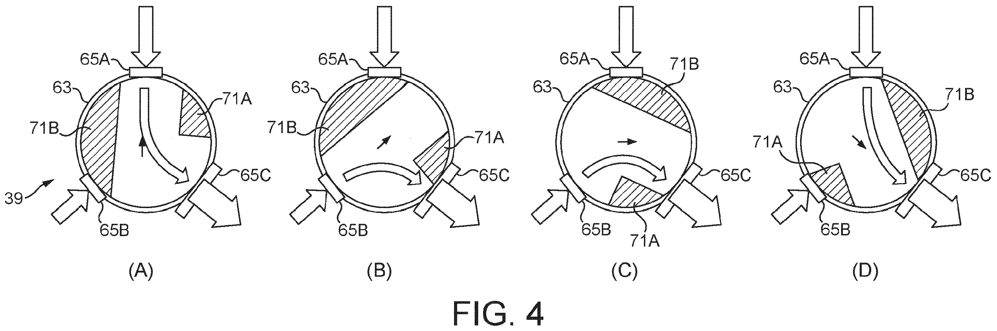

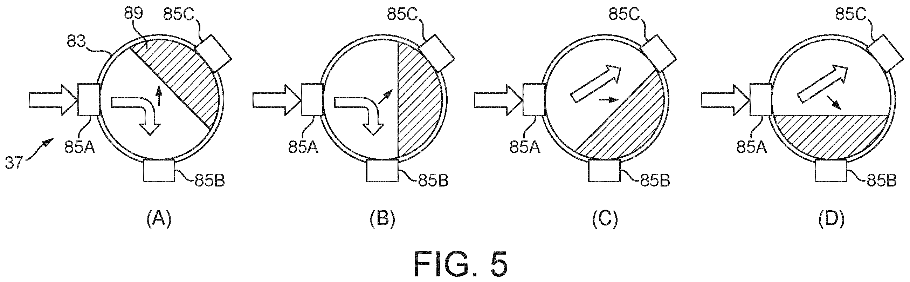

The first actuator 49 is configured to actuate the battery bypass control valve 37 and the second heat exchanger bypass control valve 39 provided in the first valve unit 31. The first actuator 49 is configured to rotate a first drive member 61 about the first axis X1 to actuate the battery bypass control valve 37 and the second heat exchanger bypass control valve 39. The first drive member 61 is fastened to the battery bypass control valve 37 and the second heat exchanger bypass control valve 39. The rotation of the first drive member 61 results in a corresponding rotation of the battery bypass control valve 37 and the second heat exchanger bypass control valve 39. As described herein, the operation of the battery bypass control valve 37 and the second heat exchanger bypass control valve 39 is dependent on an angular position of the first drive member 61. In the present embodiment, the battery bypass control valve 37 and the second heat exchanger bypass control valve 39 are formed integrally with each other. In a variant, the battery bypass control valve 37 and the second heat exchanger bypass control valve 39 may be formed separately and connected to each other, for example by one or more fasteners. The first drive member 61 may be formed integrally with the second heat exchanger bypass control valve 39 and/or the battery bypass control valve 37. Alternatively, or in addition, the battery bypass control valve 37 and the second heat exchanger bypass control valve 39 may be mounted to the first drive member 61. The first drive member 61 may, for example, comprise a rotatable shaft on which the battery bypass control valve 37 and the second heat exchanger control valve 39 are fixedly mounted. In the present embodiment, the first actuator 49 rotates the first drive member 61 in one direction (clockwise in the cross-sectional views shown in Figures 4A-D and 5A-D) selectively to configure the battery bypass control valve 37 and the second heat exchanger bypass control valve 39 in one of a plurality of (bypass) operating modes. As described herein, the battery bypass control valve and the second heat exchanger bypass control valve 37, 39 are selectively configurable in first, second, third and fourth operating modes in unison. The operating modes of the battery bypass control valve 37 and the second heat exchanger bypass control valve 39 are described herein with reference to a first drive member angular position α1 (which defines the angular position of the first drive member 61 in relation to a reference angular position of approximately 0°). At least in certain embodiments, the drive member 61 may be rotated in opposite first and second directions in order to cycle through the operating modes in different sequences. For example, the rotation of the drive member 61 may be reversed (anti-clockwise in the cross-sectional views shown in Figures 4A-D and 5A-D) to return the battery bypass control valve 37 and the second heat exchanger bypass control valve 39 through their operating modes.

A transverse cross-section through the second heat exchanger bypass control valve 39 is shown in Figures 4A-D. The second heat exchanger bypass control valve 39 is a proportional valve. In the present embodiment, the second heat exchanger bypass control valve 39 is a 3-way proportional valve. The second heat exchanger bypass control valve 39 comprises a valve housing 63 having a first inlet port 65A, a second inlet port 65B and an outlet port 65C. The first inlet port 65A is connected to the outlet of the second heat exchanger 15 to receive cooled coolant from the second heat exchanger 15. The second inlet port 65B is connected to the second heat exchanger bypass conduit 27. The outlet port 65C is connected to an inlet of the second pump 55. The second heat exchanger bypass control valve 39 is configured to proportion the coolant supplied from each of the first and second inlet ports 65A, 65B to the outlet port 65C. The second heat exchanger bypass control valve 39 proportions the supply of coolant from each of the second heat exchanger 15 and the heat exchanger bypass conduit 27 to the second pump 55. The second heat exchanger bypass control valve 39 thereby controls the proportion of the coolant supplied to the second pump 55 from the second heat exchanger 15 and the heat exchanger bypass conduit 27. To facilitate this selectively proportional flow, the outlet port 65C may have either an enlarged orifice compared to the inlet ports 65A, 65B or at least two orifices such that the outlet port 65C can never be fully closed in operation. By varying the proportion of the coolant which flows through the second heat exchanger 15, the second heat exchanger bypass control valve 39 can control the temperature of the coolant. In a variant, the second heat exchanger bypass control valve 39 may be configured to proportion the coolant supplied from an inlet port to first and second outlet ports. The second heat exchanger bypass control valve 39 may, for example, be disposed upstream of the heat exchanger 15 and be configured to proportion the coolant supplied from an inlet port to first and second outlet ports connected to the second heat exchanger bypass 27 and second heat exchanger heat exchanger 15. In this example, the inlet port may have either an enlarged orifice compared to the outlet ports or at least two orifices such that the inlet port can never be fully closed in operation.

A second heat exchanger bypass control valve body 69 is disposed in the first valve housing 63 and is rotatable about the first axis X1 (extending vertically out of the plane of the page in Figures 4A-D). In the present embodiment, the second heat exchanger bypass control valve body 69 comprises two (2) valve members 71A, 71B for progressively opening and closing each of the first inlet port 65A, the second inlet port 65B. As described above, outlet port 65C may be configured in a way that the valve members 71A, 71B may only ever partially obscure the opening of the outlet port 65C. The valve members 71A, 71B are operative to control the proportion of the coolant supplied from each of the first and second inlet ports 65A, 65B to the outlet port 65C. In the present embodiment, the first inlet port 65A, the second inlet port 65B and the outlet port 65C are angularly offset from each other by, for example, approximately 120°.°. The valve members 71A, 71B have a non-uniform angular distribution in the second heat exchanger bypass control valve body 69. The flow through the first inlet port 65A, the second inlet port 65B is dependent on the angular orientation of the of the second heat exchanger bypass control valve body 69. Other valve arrangements are contemplated to provide proportional control of the coolant. For example, the second heat exchanger bypass control valve 39 may comprise a linear actuator for displacing a valve body along a linear path.

A transverse cross-section through the battery bypass control valve 37 is shown in Figure 5A-5D. The battery bypass control valve 37 controls the supply of coolant to the battery unit 7. The battery bypass control valve 37 comprises a valve housing 83 having an inlet port 85A, a first outlet port 85B and a second outlet port 85C. The inlet port 85A is connected to an outlet of the first pump 53. In use, the first pump 53 is operated to supply coolant to the inlet port 85A of the battery bypass control valve 37. The first outlet port 85B is connected to the battery bypass conduit 21 configured to bypass coolant around or past the battery unit 7. The second outlet bypass port 85C is connected to the battery supply conduit 20. The battery bypass control valve 37 is a proportional valve in that flow entering the inlet port 85A can exit through either or both ports 85B and 85C. The battery bypass control valve 37 is selectively configurable to proportion coolant flow to either or both the battery unit 7 or the battery bypass conduit 21. A battery bypass control valve body 89 is disposed in the valve housing 83 and is rotatable about the first axis X1 (extending vertically out of the plane of the page in Figures 5A-D). The battery bypass control valve body 89 comprises a circular segment for selectively opening either or both the first outlet bypass port 85B and the second outlet bypass port 85C. The inlet bypass port 85A, the first outlet bypass port 85B and the second outlet bypass port 85C are angularly offset from each other by, for example, approximately 120°. The flow from the inlet bypass port 85A to either or both the first and second outlet ports 85B, 85C is dependent on the angular orientation of the battery bypass control valve body 89. Other valve arrangements are contemplated to control the supply of coolant to the battery supply conduit 20 and/or the battery bypass conduit 21. For example, the battery bypass control valve 37 may comprise a linear actuator for displacing a valve body along a linear path.

The second heat exchanger bypass control valve body 69 is shown in the first bypass operating mode (corresponding to a first drive member angular position α1 of approximately 0°) in Figure 4A. In the first bypass operating mode, the first inlet port 65A and the outlet port 65C are substantially fully open; and the second inlet port 65B is substantially fully closed. The supply of coolant to the second pump 55 is at least substantially exclusively from the second heat exchanger 15; and the heat exchanger bypass conduit 27 is at least substantially closed. The battery bypass control valve body 89 is shown in the first bypass operating mode (corresponding to a first drive member angular position α1 of approximately 0°) in Figure 5A. In the first bypass operating mode, the inlet bypass port 85A and the first outlet bypass port 85B are substantially fully open; and the second outlet bypass port 85C is substantially fully closed. The coolant from the first pump 53 is supplied at least substantially exclusively to the battery bypass conduit 21. The second outlet bypass port 85C is substantially fully closed and the supply of coolant to the battery unit 7 is at least substantially inhibited.

The second heat exchanger bypass control valve body 69 is shown in the second bypass operating mode (corresponding to a first drive member angular position α1 of, for example, approximately 45°) in Figure 4B. In this second operating mode, the first inlet port 65A is substantially fully closed; and the second inlet port 65B and the outlet port 65C are substantially fully open. The outlet port 65C is partially open to allow a flow through the outlet port 65C. It should be noted that in the embodiment shown the outlet port 65C is not fully open because the configuration of the size and position of the valve members 71A, 71B, relative to the size of the outlet port 65C, means that only a portion of the outlet port 65C is ever inhibited, However, the opening of the port 65C in this way still allows a sufficient flow through the outlet port 65C.

In this second bypass operating mode, therefore, the supply of coolant to the second pump 55 is at least substantially exclusively from the heat exchanger bypass conduit 27; and the second heat exchanger 15 is at least substantially closed. The rotation of the second heat exchanger bypass control valve body 69 from the first bypass operating mode to the second bypass operating mode progressively increases the proportion of the coolant supplied to the second pump 55 from the heat exchanger bypass conduit 27, with a corresponding decrease in the proportion of the coolant supplied to the second pump 55 from the second heat exchanger 15. The battery bypass control valve body 89 is shown in the second bypass operating mode (corresponding to a first drive member angular position α1 of, for example, approximately 45°) in Figure 5B. In the second bypass operating mode, the inlet bypass port 85A and the first outlet bypass port 85B are substantially fully open; and the second outlet bypass port 85C is substantially fully closed. Thus, although the angle of the battery bypass valve control valve body 89 is angularly offset, the supply of coolant is unchanged from the arrangement in which the battery bypass control valve body 89 is in the first bypass operating mode (shown in Figure 5A).

**The** second heat exchanger bypass control valve body 69 is shown in the third bypass operating mode (corresponding to a first drive member angular position α1 of, for example, approximately 90°) in Figure 4C. In the third bypass operating mode, the second inlet port 65B and the outlet port 65C remain substantially fully open; and the first inlet port 65B remains substantially fully closed. The supply of coolant to the second pump 55 is at least substantially exclusively from the second heat exchanger bypass conduit 27; and flow through the second heat exchanger 15 is at least substantially inhibited. The battery bypass control valve body 89 is shown in the third bypass operating mode (corresponding to a first drive member angular position α1 of, for example, approximately 90°) in Figure 5C. In the third bypass operating mode, the inlet bypass port 85A and the second outlet bypass port 85C are substantially fully open; and the first outlet bypass port 85B is substantially fully closed. The coolant from the first pump 53 is supplied at least substantially exclusively to the battery unit 7. The first outlet bypass port 85B is substantially fully closed and the supply of coolant to the battery bypass conduit 21 is at least substantially inhibited. The rotation of the battery bypass control valve body 89 from the second bypass operating mode to the third bypass operating mode progressively increases the proportion of the coolant supplied to the battery unit 7 from the first pump 53, with a corresponding decrease in the proportion of the coolant supplied to the battery bypass conduit 21 from the first pump 53.

The second heat exchanger bypass control valve body 69 is shown in the fourth bypass operating mode (corresponding to a first drive member angular position α1 of, for example, approximately 135°) **in** Figure 4D. In the fourth bypass operating mode, the first inlet port 65A and the outlet port 65C are substantially fully open; and the second inlet port 65B is substantially fully closed. The supply of coolant to the second pump 55 is at least substantially exclusively from the second heat exchanger 15; and coolant flow from the second heat exchanger bypass conduit 27 is at least substantially inhibited. The rotation of the second heat exchanger bypass control valve body 69 from the third bypass operating mode to the fourth bypass operating mode progressively decreases the proportion of the coolant supplied to the second pump 55 from the second heat exchanger bypass conduit 27, with a corresponding increase in the proportion of the coolant supplied to the second pump 55 from the second heat exchanger 15. The battery bypass control valve body 89 is shown in the fourth bypass operating mode (corresponding to a first drive member angular position α1 of, for example, approximately 135°) in Figure 5D. In the fourth bypass operating mode, the inlet bypass port 85A and the second outlet bypass port 85C are substantially fully open; and the first outlet bypass port 85B is substantially fully closed. Thus, the supply of coolant is unchanged from the arrangement in which the bypass control valve body 89 is in the third bypass operating mode (shown in Figure 5C).

Thus, in different angular positions of the drive member 61, between, for example, 0 and 135 degrees of rotation, flow of coolant may be proportionally controlled through the second heat exchanger 15 (to any proportion between all flow through the second heat exchanger 15 (second heat exchanger supply conduit 26) and all flow bypassing the exchanger 15 (second heat exchanger bypass conduit 27)), while, at the same time, flow of coolant may be proportionally controlled through the battery unit 7 (to any proportion between all flow through the battery unit 7 (battery supply conduit 20) and all flow bypassing the battery unit 7 (battery bypass conduit 21)). Control of the angular position of the drive shaft 61 is described further below.

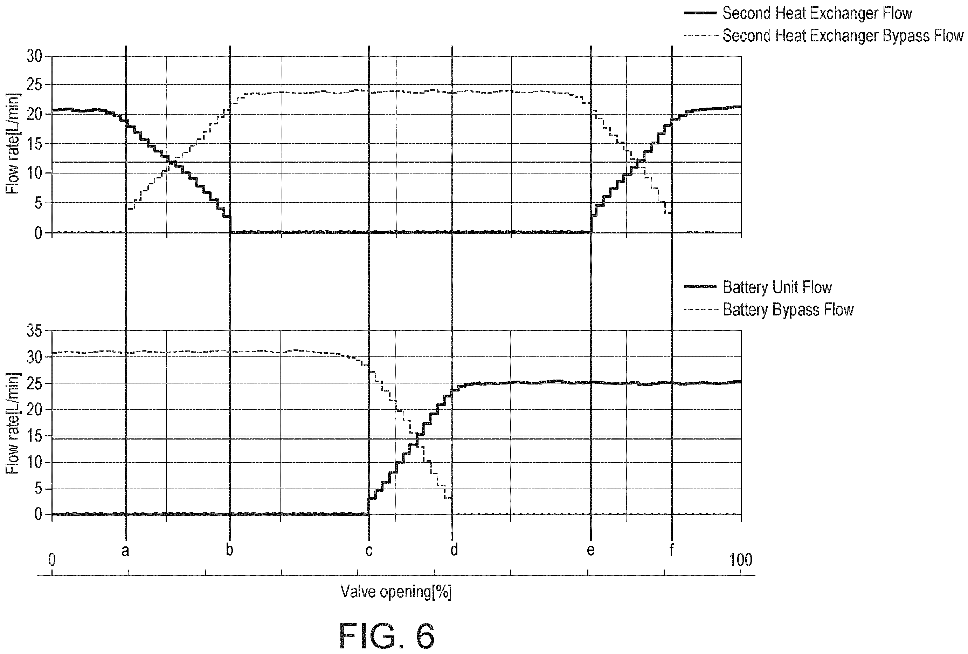

Figure 6 is a graph to show how the operation of the battery bypass control valve 37 and the second heat exchanger bypass control valve 39 achieves the various different flow combinations described previously. The upper graph of Figure 6 represents the flow rate through the second heat exchanger 15 (second heat exchanger supply conduit 26) and the flow rate bypassing the second heat exchanger 15 (second heat exchanger bypass conduit 27) as a function of angular position of the first drive member 61 by the actuator 49. The lower graph of Figure 6 represents the flow rate through the battery unit 7 (battery supply conduit 20) and the flow rate bypassing the battery unit 7 (battery bypass conduit 21) as a function of angular position of the first drive member 61. In the upper graph it can be seen, for example, that a first "blended bypass operating mode" is achieved through a first angular range (shown in the area between vertical lines a and b) where the flow through the second heat exchanger 15 gradually decreases and the flow through the second heat exchanger bypass conduit 27 gradually increases. In this first blended mode for the second heat exchanger bypass control valve 39, there is a full coolant flow through the battery bypass conduit 21 which remains substantially constant.

As the first drive member 61 is moved through a second angular range (shown in the area between vertical lines b and c), when the supply directly from the second heat exchanger 15 is substantially inhibited, further angular rotation of the first drive member 61 does not result in a change in flow, with the flow rate through the second heat exchanger bypass conduit 27 remaining substantially constant and the flow rate directly from the second heat exchanger 15 remaining substantially inhibited. There is also no change in the flow rate through the battery bypass conduit 21 through this second angular range. The flow rate through the battery 7 itself also remains substantially inhibited.

As the first drive member 61 is moved between a third angular range (shown in the area between vertical lines c and d), the flow rate through the battery bypass conduit 21 is gradually decreasing while the coolant flow through the battery supply conduit 20 is gradually increasing. This is a second "blended bypass operating mode" of the valve arrangement. During this second blended bypass operating mode, angular movement of the first drive member 61 does not affect the flow rate through the second heat exchanger bypass conduit 27, which remains substantially constant. The flow rate through the second heat exchanger 15 directly remains substantially inhibited.

As the first drive member 61 is moved through a fourth angular range (shown in the area between vertical lines d and e), the flow continues through the battery supply conduit 20 and remains substantially constant. The flow through the second heat exchanger bypass conduit 27 also remains substantially constant. The flow directly from the second heat exchanger 15 remains substantially inhibited.

As the first drive member 61 is moved through a fifth angular range (shown in the area between vertical lines e and f), there is a third "blended bypass operating mode" in which the flow rate through the second heat exchanger bypass conduit 27 gradually decreases and the flow rate through the second heat exchanger 15 gradually increases. Through this third blended phase, the flow rate through the battery supply conduit 20 remains substantially constant with substantially inhibited flow through the battery bypass conduit 21.

It will be appreciated from the foregoing description that the first, second and third blended bypass operating modes are entirely independent of one another, such that if there is a blended flow through the second heat exchanger bypass conduit 27 around the second heat exchanger 15 and through the second heat exchanger 15 itself, there cannot in the same mode be a blended flow through the battery supply conduit 20 and the battery bypass conduit 21 in the second coolant loop 18. The same is true when there is a blended flow through the battery supply conduit 20 and the battery bypass conduit 21, when there can be no blended flow through the second heat exchanger 15 in the third coolant loop 19.

Rotational positions of the drive member 61 between, for example, 135 and 360 degrees are not employed, other than optionally to return from the fourth to the first bypass operating modes.

There are, therefore, seven discrete bypass operating modes of the first valve unit 31, which is summarised in Table 1 below.

**Table 1 - Bypass operating modes**

| Bypass Operating Mode Reference | Battery Unit 7 Flow | Battery Bypass 21 Flow | Second Heat Exchanger 15 Flow | Second Heat Exchanger Bypass 27 Flow |
|---|---|---|---|---|
| 1 | N | Y | Y | N |
| 2 | N | Y | Partial | Partial |
| 3 | N | Y | N | Y |
| 4 | Partial | Partial | N | Y |
| 5 | Y | N | N | Y |
| 6 | Y | N | Partial | Partial |
| 7 | Y | N | Y | N |

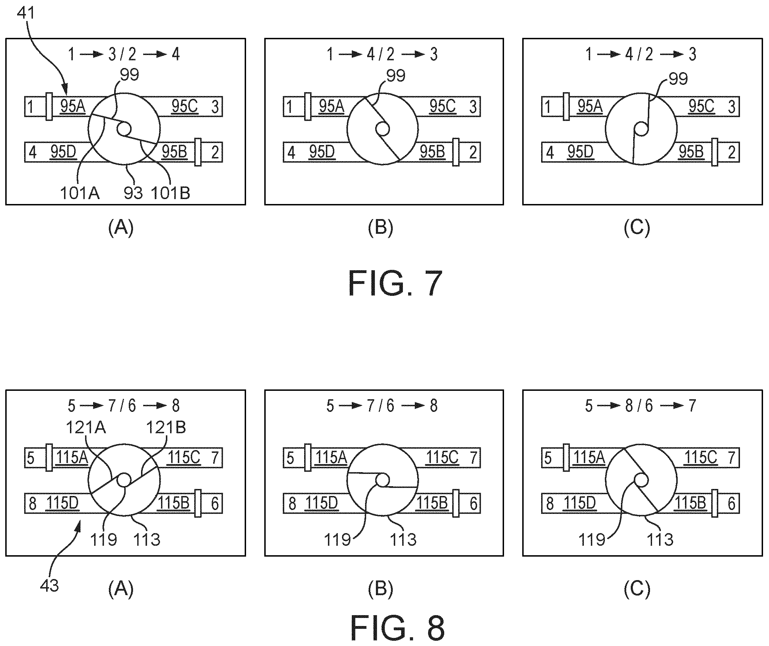

Referring again to Figures 2 and 3, the first and second crossflow valves 41, 43 are provided in the second valve unit 33 and are configured selectively to control the flow of coolant through the coolant network (17, 18, 19). The second actuator 51 is provided to control operation of the first and second crossflow valves 41, 43. The second actuator 51 is configured to rotate a second drive member 91 about a second axis X2 to actuate the first and second crossflow valves 41, 43. The second drive member 91 is fastened to the first and second crossflow valves 41, 43. The rotation of the second drive member 91 results in a corresponding rotation of the first and second crossflow valves 41, 43 in unison. As described herein, the operation of the first and second crossflow valves 41, 43 is dependent on an angular position of the second drive member 91. In the present embodiment, the first and second crossflow valves 41, 43 are formed integrally with each other. In a variant, the first and second crossflow valves 41, 43 may be formed separately and connected to each other, for example by one or more fasteners. The second drive member 91 may be formed integrally with the first crossflow valve 41 and/or the second crossflow valve 43. Alternatively, or in addition, the first and second crossflow valves 41, 43 may be mounted to the second drive member 91. The second drive member 91 may, for example, comprise a rotatable shaft on which the first and second crossflow valves 41, 43 are fixedly mounted. In the present embodiment, the second actuator 51 rotates the second drive member 91 in one direction (clockwise in the cross-sectional views shown in Figures 7A-C and 8A-C) selectively to configure the first and second crossflow valves 41, 43 in first, second and third crossflow operating modes. The crossflow operating modes of the first and second crossflow valves 41, 43 are described herein with reference to a second drive member angular position α2 (which defines the angular position of approximately the second drive member 91 in relation to a reference angular position of approximately 0°).

A transverse cross-section through the first crossflow valve 41 is shown in Figures 7A-C. The first crossflow valve 41 comprises a first crossflow valve housing 93 having first, second, third and fourth crossflow ports 95A-D. The first crossflow port 95A of the first crossflow valve 41 is connected to the third coolant loop 19, the second crossflow port 95B of the first crossflow valve 41 is connected to the second coolant loop 18, the third crossflow port 95C of the first crossflow valve 41 is connected directly to a first crossflow port 115A of the second crossflow valve 43 and the fourth crossflow port 95D of the first crossflow valve 41 is connected to the first coolant loop 17. The first crossflow port 95A of the first crossflow valve 41 is an inlet port configured to received coolant from the second pump 55. The second crossflow port 95B of the first crossflow valve 41 is an inlet port configured to indirectly receive coolant from the first pump 53.

The third crossflow port 95C of the first crossflow valve 41 is an outlet port configured to discharge coolant to the second crossflow valve 43, the coolant being supplied from one of either the first crossflow port 95A or the second crossflow port 95B. The fourth crossflow port 95D of the first crossflow valve 41 is an outlet port configured to discharge coolant to the second coolant loop 18, the coolant being supplied from the other one of either the first crossflow port 95A or the second crossflow port 95B. A first crossflow valve body portion 99 of a crossflow valve body 98 is disposed in the first crossflow valve housing 93 and is rotatable about the second axis X2. In the present embodiment, the first crossflow valve body portion 99 comprises opposing valve members 101A, 101B configured to control the flow of coolant through the coolant loops 17, 18, 19. The first crossflow valve body portion 99 is rotated by the second drive member 91 to control the flow paths through the first crossflow valve 41. When the flow is directed from the first crossflow port 95A to the third crossflow port 95C and from the second crossflow port 95B to the fourth crossflow port 95D, the first crossflow valve 41 condition is considered to be 'parallel'. In an opposite sense, when the flow is directed from the first crossflow port 95A to the fourth crossflow port 95D and from the second crossflow port 95B to the third crossflow port 95C, the first crossflow valve 41 condition is considered to be 'crossed'.

A transverse cross-section through the second crossflow valve 43 is shown in Figures 8A-C. The second crossflow valve 43 comprises a second crossflow valve housing 113 having first, second, third and fourth crossflow ports 115A-D. The first crossflow port 115A of the second crossflow valve 43 is connected directly to the third crossflow port 95C of the first crossflow valve 41, the second crossflow port 115B is connected to the first coolant loop 17, the third crossflow port 115C of the second crossflow valve 43 is connected to the third coolant loop 19 and the fourth crossflow port 115D is connected to the second coolant loop 18. The first crossflow port 115A of the second crossflow valve 43 is an inlet port configured to receive coolant from the third crossflow port 95C of the first crossflow valve 41. The second crossflow port 115B of the second crossflow valve 43 is an inlet port configured to received coolant from the first heat exchanger 13. The third crossflow port 115C of the second crossflow valve 43 is an outlet port configured to supply coolant to the first and second drive units 5-1, 5-2, the coolant being supplied from one of the first crossflow port 115A and the second crossflow port 115B. The fourth crossflow port 115D is an outlet port configured to supply coolant to the first pump 53, the coolant being supplied from the other one of the first crossflow port 115A and the second crossflow port 115B. A second crossflow valve body portion 119 of the crossflow valve body 98 is disposed in the second crossflow valve housing 113 and is rotatable about the second axis X2. In the present embodiment, the second crossflow valve body 119 comprises opposing valve members 121A, 121B configured to control the flow of coolant through the coolant loops 17, 18, 19. The second crossflow valve body 119 is rotated by the second drive member 91 to control the flow paths through the second crossflow valve 43. When the flow is directed from the first crossflow port 115A to the third crossflow port 115C and from the second crossflow port 115B to the fourth crossflow port 115D, the second crossflow valve 43 condition is considered to be 'parallel'. In an opposite sense, when the flow is directed from the first crossflow port 115A to the fourth crossflow port 115D and from the second crossflow port 115B to the third crossflow port 115C, the second crossflow valve 43 condition is considered to be 'crossed'.

The first crossflow valve body portion 99 is shown in the first crossflow operating mode (corresponding to a second drive member angular position α2 of 0°) in Figure 7A. In the first crossflow operating mode, the first crossflow port 95A and the third crossflow port 95C of the first crossflow valve 41 are in fluid communication with each other; and the second crossflow port 95B and the fourth crossflow port 95D of the first crossflow valve 41 are in fluid communication with each other. The second crossflow valve body 119 is shown in the first crossflow operating mode (corresponding to a second drive member angular position α2 of 0°) in Figure 8A. In the first operating mode, the first crossflow port 115A and the third crossflow port 115C of the second crossflow valve 43 are in fluid communication with each other; and the second crossflow port 115B and the fourth crossflow port 115D of the second crossflow valve 43 are in fluid communication with each other. In the first crossflow operating mode, the first and second crossflow valves 41, 43 configure the coolant network to maintain the second and third coolant loops 18, 19 separate from each other with the first coolant loop 17 being place in series with the second coolant loop 18. The first pump 53 pumps coolant through the first and second coolant loops 17, 18. The second pump 55 pumps coolant through the third coolant loop 19. In the first crossflow operating mode, there is active cooling of the battery unit 7; and active cooling of the front and rear electric drive units 5-1, 5-2. The battery unit 7 and the front and rear electric drive units 5-1, 5-2 are connected in parallel and substantially separated. The first crossflow operating mode may be appropriate during warm-up, for example.

The first crossflow valve body portion 99 is shown in the second crossflow operating mode (corresponding to a second drive member angular α2 position of approximately 45°) in Figure 7B. In the second crossflow operating mode, the first crossflow port 95A and the fourth crossflow port 95D of the first crossflow valve 41 are in fluid communication with each other; and the second crossflow port 95B and the third crossflow port 95C of the first crossflow valve 41 are in fluid communication with each other. The second crossflow valve body 119 is shown in the second crossflow operating mode (corresponding to a second drive member angular α2 position of approximately 45°) **in** Figure 8B. The operational configuration of the second crossflow valve 43 is unchanged from the first crossflow operating mode. In particular, the first crossflow port 115A and the third crossflow port 115C of the second crossflow valve 43 are in fluid communication with each other; and the second crossflow port 115B and the fourth crossflow port 115D of the second crossflow valve 43 are in fluid communication with each other. Thus, the second crossflow valve 43 maintains the same operational configuration when the first crossflow valve body portion 99 as in the first crossflow operating mode. In the second crossflow operating mode, the battery unit 7 and the first and second drive units 5-1, 5-2 are connected in series. The coolant is pumped by the second pump 55 through the first heat exchanger 13. The coolant is also pumped by the first pump 53 into the battery unit 7. The coolant is then diverted by the first crossflow valve 41 and supplied to the front and rear electric drive units 5-1, 5-2, and then through the second heat exchanger 15 before feeding the second pump 55. In the second crossflow operating mode, the second heat exchanger 15 can be operational to reject heat from the coolant. The reduced temperature of the coolant may promote cooling of the battery unit 7 and the front and rear electric drive units 5-1, 5-2. In this position it can be arranged that there is no ambient heat exchange by the first heat exchanger 13. The refrigerant side of the first heat exchanger 13 can be inactive (i.e., no refrigerant is pumped to the first heat exchanger 13) such that substantially no heat exchange takes place in the first heat exchanger 13. There is therefore active cooling of the battery unit 7; and active cooling of the front and rear electric drive units 5-1, 5-2.

The first crossflow valve body portion 99 is shown in the third crossflow operating mode (corresponding to a second drive member angular position α2 of approximately 90°) in Figure 7C. The operational configuration of the first crossflow valve 41 is unchanged from the second crossflow operating mode. In particular, the first crossflow port 95A and the fourth crossflow port 95D of the first crossflow valve 41 are in fluid communication with each other; and the second crossflow port 95B and the third crossflow port 95C of the first crossflow valve 41 are in fluid communication with each other. The second crossflow valve body 119 is shown in the third crossflow operating mode (corresponding to a second drive member angular position α2 of approximately 90°) in Figure 8C. In the third crossflow operating mode, the first crossflow port 115A and the fourth crossflow port 115D of the second crossflow valve 43 are in fluid communication with each other; and the second crossflow port 115B and the third crossflow port 115C of the second crossflow valve 43 are in fluid communication with each other. Thus, the second crossflow valve 43 also connects the first coolant loop 17 to the third coolant loop 19 in series. In the third crossflow operating mode, the coolant in the third coolant loop 19 is pumped from the second pump 55 directly to the first heat exchanger 13, then supplied to the EDUs 5-1, 5-2 and the second heat exchanger 15. The first pump 53 is configured to circulate the coolant through the battery unit 7 within a shortened coolant loop 18 without a heat exchanger.

Thus, in different angular positions of the drive member 91, for example, between 0 and 90 degrees of rotation, in the first crossflow operating mode, flow of coolant is controlled through the second and third coolant loops 18, 19 independently of one another with the first coolant loop 17 in series with the second coolant loop 18; in the second crossflow operating mode, flow of coolant is completely through coolant network with no separation; and in the third crossflow operating mode, flow of coolant is controlled through the second and third coolant loops 18, 19 independently of one another with the first coolant loop 17 in series with the third coolant loop 19. Control of the angular position of the drive shaft 91 is described further below. It will be understood that the first and second crossflow valves 41, 43 revert from the third operating mode to the first operating mode once the drive shaft 91 has rotated through, for example, 180 degrees.

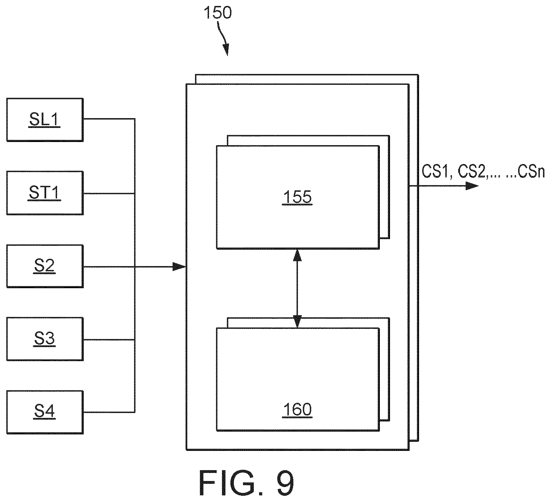

A controller 150 is provided for controlling operation of the control valve apparatus 1 and in particular to operate the first and second actuators 49, 51 to control the angular positions of the first and second drive shafts 61,91 of the first and second valve units 31,33. As shown schematically in Figure 9, the controller 150 comprises at least one electronic processor 155 and a system memory 160. A set of computational instructions is stored on the system memory 160 together with calibration data which is accessed for the purpose of controlling the temperature of flow through the coolant network.

When executed, the computational instructions cause the system memory 160 to execute the method(s) described herein. The at least one electronic processor 155 is configured to output a number of control signals, for example, CS1, CS2 to CSn, to control the first and second actuators 49, 51 respectively. The controller may be arranged to output further control signals CSn to control other components within the thermal management system 3 such as the battery unit 7, heat exchangers 13, 15, pumps 53, 55. The first and second actuators 49, 51 can be controlled independently of each other to provide independent control of the first and second valve units 31, 33, if required. The at least one electronic processor 155 may be configured to receive electrical signals from the coolant level sensor SL1 and/or the coolant temperature sensor ST1, and any number of other sensors S2, S3 and S4. As indicated in the figures, the coolant temperature sensor ST1 provides a temperature sensor output signal STO to the controller 150 which is indicative of the temperature of the coolant flow in this position of the coolant network, downstream of the second heat exchanger bypass control valve 39 and upstream of the second heat exchanger 15.

The coolant temperature sensor ST1 is located in a position upstream of the second pump 55 and measures the temperature of the coolant supplied, via the second heat exchanger bypass control valve 39, from both the second heat exchanger 15 and the low temperature heat exchanger bypass conduit 27. The controller 150 is configured to control the second heat exchanger bypass control valve 39 in dependence on the temperature of the coolant measured by the coolant temperature sensor ST1 and as indicated by the temperature sensor signal STO. In particular, the controller 150 is configured to control the proportion of the coolant supplied from the second heat exchanger 15 and the proportion of coolant supplied from the low temperature heat exchanger bypass conduit 27, including in some circumstances no flow from one or the other, by controlling the second heat exchanger bypass control valve 39 to achieve a target temperature of the coolant supplied to the second pump 55.

By way of example, if the temperature output signal STO indicates that the temperature of coolant flowing to the second pump 55 exceeds the target temperature, then the second heat exchanger bypass valve 39 is controlled so as to increase the proportion of flow through the second heat exchanger 15 and to reduce the proportion of flow through the bypass conduit 27 for the second heat exchanger 15, or to reduce the proportion of flow through the bypass conduit 27 to zero. With an increased proportion of flow to the second pump 55 coming from the second heat exchanger 15 (or from all of the flow coming from the second heat exchanger 15), the temperature of the flow to the second pump 55 is cooled. Conversely, if the temperature output signal STO indicates that the temperature of coolant flowing to the second pump 55 is below the target temperature, then the second heat exchanger bypass control valve 39 is controlled so as to reduce the proportion of flow through the second heat exchanger 15 and to increase the proportion of flow through the bypass conduit 27 for the second heat exchanger 15, or to reduce the proportion of flow through the second heat exchanger 15 to zero. With an increased proportion of flow to the second pump 55 coming from the bypass conduit 27 for the second heat exchanger 15 (or from all of the flow coming from the bypass conduit 27 for the second heat exchanger 15), the temperature of the flow to the second pump 55 is increased. This feedback process from the temperature sensor ST1 to the controller 150 for the purpose of controlling the second heat exchanger bypass control valve 39 is continuous and enables the temperature of the coolant flow to the second pump 55 at the required temperature.

The controller 150 is configured to receive the output STO from the temperature sensor ST1, together with the signals from the other sensors **SL1,** S2, S3, S4. The controller 150 determines the target temperature based on one or more of the inputs it receives **SL1,** S2, S3, S4. In some examples, additional decision data may be sent to controller 150 from a parent controller (not shown) which is configured to control various aspects of vehicle operation, including the coolant system. The interaction between the parent controller and the controller 150 is beyond the scope of this patent application and will not be described in further detail. However, by way of general example, the parent controller receives data relating to various conditions both internal and external to the vehicle and, responsive to this, selects the appropriate one of the network configurations for the coolant flow and the desired target temperature for the flow to the second pump 55 to achieve the optimum coolant conditions within the coolant network for any given circumstances.

In some none illustrated embodiments a controller may transmit data to other controllers within the vehicle, the data may be from any combination of sensors associated with the thermal management system.

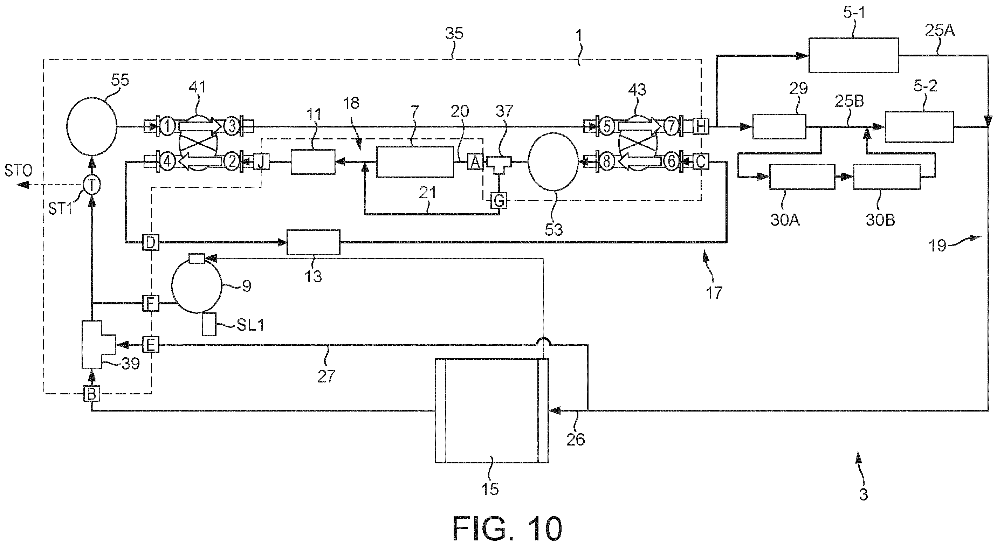

The operation of the control valve apparatus 1 in first, second and third operating modes of the crossflow valves 41, 43 is illustrated in Figures 10, 11 and 12 and summarised in Table 2 below:

**Table 2 - Crossflow valves operating modes**

| Crossflow Operating Mode Reference | Operation | First Crossflow Valve 41 Condition | Second Crossflow Valve 43 Condition |
|---|---|---|---|
| 1 | Parallel coolant circulation loops with first heat exchanger in the first coolant circulation loop | Parallel | Parallel |
| 2 | Both coolant circulation loops are combined to operate in series as one coolant circulation loop | Crossed | Parallel |
| 3 | Parallel coolant circulation loops with first heat exchanger in the second coolant circulation loop | Crossed | Crossed |

Taking Table 1 and Table 2 in combination, it is observed that there is at least twenty-one discrete modes of operation for the control valve apparatus 1 as a whole. In other words, there are seven different bypass operating modes for each of the three crossflow operating modes. The detail of each of the twenty-one discrete modes of operation is discussed below in the relevant sections.

The control valve apparatus 1 is shown in the first crossflow operating mode in Figure 10. The second valve control unit 33 is configured such that the first crossflow valve body portion 99 is in the first crossflow operating mode (shown in Figure 7A). The first crossflow port 95A and the third crossflow port 95C of the first crossflow valve 41 are in fluid communication with each other; and the second crossflow port 95B and the fourth crossflow port 95D of the first crossflow valve 43 are in fluid communication with each other. The second crossflow valve body 119 is in the first crossflow operating mode (shown in Figure 8A). The first crossflow port 115A and the third crossflow port 115C of the second crossflow valve 43 are in fluid communication with each other; and the second crossflow port 115B and the fourth crossflow port 115D of the second crossflow valve 43 are in fluid communication with each other.

The result of configuring the control valve apparatus 1 in the first crossflow valve operating mode is that the second and third coolant loops 18, 19 operate in parallel. Furthermore, in this configuration the first heat exchanger 13 in the first coolant loop 17 is in series with the second coolant loop 18 along with the battery unit 7 and the coolant heater 11.

Referring now to Figure 10, in the first crossflow valve operating mode and referring to the combination of the first coolant loop 17 and the second coolant loop 18, coolant flows from the outlet of the first pump 53 to the battery bypass control valve 37. At this point the coolant flow is departing the control valve apparatus 1 via either or both ports A and G. The battery bypass control valve 37 selectively diverts the coolant either to the battery supply conduit 20, and therefore into the battery unit 7, or around the battery unit 7 via a battery bypass conduit 21. Alternatively, the flow of coolant may be blended by selectively diverting a portion of the coolant to each the battery supply conduit 20 and the battery bypass conduit 21 at the same time. The outlet of the battery unit 7 and the outlet of the bypass conduit 21 then rejoin briefly before the coolant flow is split again and directed into the inlet of the coolant heater 11. The coolant flow from the outlet of the coolant heater 11 then flows back into the control valve apparatus 1 via port J and subsequently into the first crossflow valve 41 where it enters via port 95B and exits through port 95D as explained above. The coolant flow once again departs from the control valve apparatus 1 via port D and enters the inlet of the first heat exchanger 13. The coolant exits the first heat exchanger 13 outlet, re-entering the control valve apparatus 1 via port C, and enters the second crossflow valve 43 via port 115B. The coolant flow exits the valve 43 via port 115D to re-enter the inlet of the first pump 53, thus completing the combination of the first and second coolant loops 17, 18.

Referring still to Figure 10 and now to the third coolant loop 19 in the first crossflow operating mode, coolant flows from the outlet of the second pump 55 to the first crossflow valve 41 where the coolant flow enters via port 95A and exits through port 95C as explained above. The coolant flow then remains within the control valve apparatus 1 and transfers directly to the second crossflow valve 43 where coolant flow enters via port 115A and exits via port 115C as explained above also. At this point the coolant flow departs from the control valve apparatus 1 via port H and continues onwards to supply coolant to at least the first drive unit 5-1. The coolant flow then exits the first drive unit 5-1 and is split by a Y connection into either or both the second heat exchanger supply conduit 26, and therefore into the second heat exchanger 15, or around the second heat exchanger 15 via the second heat exchanger bypass conduit 27. Both the coolant flow from the second heat exchanger 15 and the send heat exchanger bypass conduit 27 re-enter the control valve apparatus 1 via ports B and E respectively and convene at the second heat exchanger bypass control valve 39 where coolant flow is selectively controlled from either the second heat exchanger 15 or the second heat exchanger bypass conduit 27 or a blend of both. The coolant flow exits the second heat exchanger bypass control valve 39 to re-enter the inlet of the second pump 55, thus completing the third coolant loop 19.

**Table 3 - Bypass operating modes of first crossflow operating mode**

| Mode Reference | Description |
|---|---|
| 1-1 | • Parallel coolant loops (18, 19) |
| | • First coolant loop 17 in series with second coolant loop 18 |
| | • Battery unit 7 is bypassed |
| | • Second heat exchanger 15 receives full coolant flow |
| 1-2 | • Parallel coolant loops (18, 19) |
| | • First coolant loop 17 in series with second coolant loop 18 |
| | • Battery unit 7 is bypassed |
| | • Second heat exchanger 15 is blended with bypass |
| 1-3 | • Parallel coolant loops (18, 19) |
| | • First coolant loop 17 in series with second coolant loop 18 |
| | • Battery unit 7 is bypassed |
| | • Second heat exchanger 15 is bypassed |
| 1-4 | • Parallel coolant loops (18, 19) |
| | • First coolant loop 17 in series with second coolant loop 18 |
| | • Battery unit 7 is blended with bypass |
| | • Second heat exchanger 15 is bypassed |
| 1-5 | • Parallel coolant loops (18, 19) |
| | • First coolant loop 17 in series with second coolant loop 18 |
| | • Battery unit 7 receives full coolant flow |
| | • Second heat exchanger 15 is bypassed |
| 1-6 | • Parallel coolant loops (18, 19) |
| | • First coolant loop 17 in series with second coolant loop 18 |
| | • Battery unit 7 receives full coolant flow |
| | • Second heat exchanger 15 is blended with bypass |
| 1-7 | • Parallel coolant loops (18, 19) |
| | • First coolant loop 17 in series with second coolant loop 18 |
| | • Battery unit 7 receives full coolant flow |
| | • Second heat exchanger 15 receives full coolant flow |

As mentioned above, the first heat exchanger 13 may itself operate in several modes in dependence on the vehicle operating conditions. For example, the first heat exchanger 13 may be bi-directional and could be configured selectively to cool the coolant supplied to the battery unit 7, or to supply heat from the outside environment to heat the coolant. Alternatively, a refrigerant could be pumped to a refrigerant side of the first heat exchanger 13 to cause the first heat exchanger 13 to operate as a coolant chiller. In another instance, the supply of refrigerant could be halted to reduce or prevent heat exchange in the first heat exchanger 13.

Some of the above discrete modes shown in Table 3. of operation may be more useful than others. For example, Mode 1-3, where both the battery unit 7 and the second heat exchanger 15 are bypassed, is useful when the ambient environmental air temperature is extremely low, for example -40°C to -10°C, and the cabin and at least one EDU 5-n require heating. In this mode, the first coolant loop 17 is focussed on supplying heat energy to the first heat exchanger 13, where it is transferred to the cabin of the vehicle V and minimises heat loss by bypassing the battery unit 7. The source of the heat energy being supplied to the coolant is the HV coolant heater 11 which is upstream of the first heat exchanger 13. The third coolant loop 19 is focussed on allowing the EDU 5-n and the electric power unit 29 to self-heat by allowing the coolant to retain heat energy by bypassing the second heat exchanger 15.

Alternatively, Modes 1-4 through to 1-7 can be used in a 'battery unit 7 warm-up mode' wherein heated coolant is supplied to the battery unit 7 in low environmental air temperatures, for example -10°C to +5°C. In this mode, the HV coolant heater 11 is actively supplying heat energy to the coolant for delivery to the battery unit 7. Importantly, the first heat exchanger 13 is inactive so that heat energy is supplied substantially exclusively to the battery unit 7. Another variant of this mode, referred to as 'regulation mode', omits the use of the HV coolant heater 11 and allows the battery unit 7 to self-warm by transferring heat energy to the circulating uncooled coolant.

In another example, Mode 1-7 is useful for active cooling of the battery unit 7, the EDU 5-n and the electric power unit 29 in a situation where there is high ambient environmental temperature and/or there is a high load demand on the vehicle V. Where maximum cooling effect is required, the first heat exchanger 13 positioned in the first coolant loop 17 can be operated as a coolant chiller, thereby supplying chilled coolant to the battery unit 7 to promote cooling. The coolant supplied to the EDU 5-n and the electric power unit 29 in the third coolant loop 19 is passed through the second heat exchanger 15 to reject heat energy from the coolant.

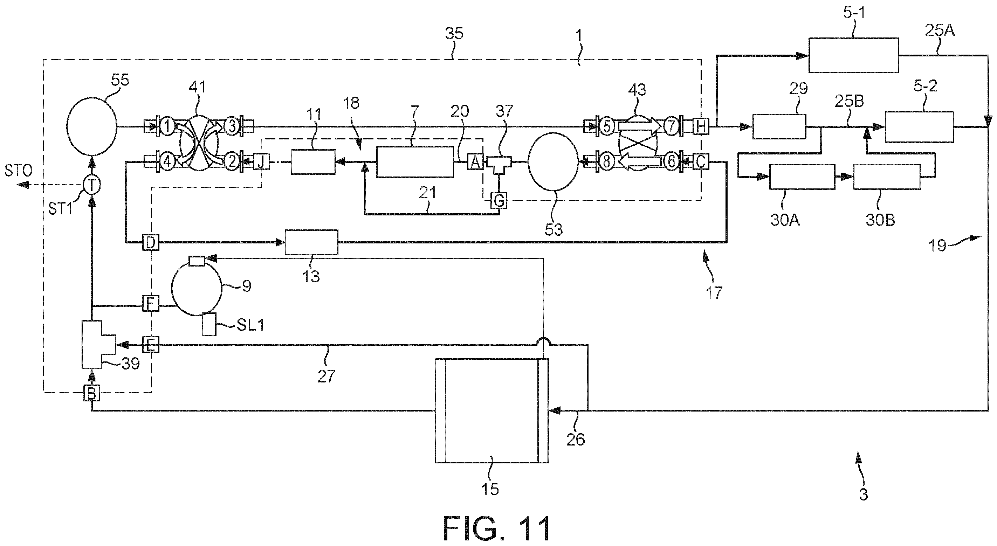

The control valve apparatus 1 is shown in the second crossflow operating mode in Figure 11. The second valve control unit 33 is configured such that the first crossflow valve body portion 99 is in the second crossflow operating mode (shown in Figure 7B). The first crossflow port 95A and the fourth crossflow port 95D of the first crossflow valve 41 are in fluid communication with each other; and the second crossflow port 95B and the third crossflow port 95C of the first crossflow valve 43 are in fluid communication with each other. The second crossflow valve body 119 is in the second crossflow valve operating mode (shown in Figure 8B). The first crossflow port 115A and the third crossflow port 115C of the second crossflow valve 43 are in fluid communication with each other; and the second crossflow port 115B and the fourth crossflow port 115D of the second crossflow valve 43 are in fluid communication with each other. Configuring the control valve apparatus 1 in the second crossflow operating mode combines the coolant loops 17, 18, 19 so that the entire coolant network of the thermal management system 3 operates in series as one coolant loop.

Referring now to Figure 11 that shows the second crossflow operating mode, coolant flows from the outlet of the first pump 53 to the battery bypass control valve 37. At this point the coolant flow is departing the control valve apparatus 1 via either or both ports A and G. As explained above, the battery bypass control valve 37 selectively diverts the coolant either to the battery supply conduit 20, and therefore into the battery unit 7, or around the battery unit 7 via a battery bypass conduit 21 or a blend of both. The outlet of the battery unit 7 and the outlet of the bypass conduit 21 then rejoin and are directed into the inlet of the coolant heater 11. The coolant flows out of the outlet of the coolant heater 11 to flow back into the control valve apparatus 1 via port J and subsequently into the first crossflow valve 41 where it enters via port 95B and exits through port 95C as explained above. The coolant flow then remains within the control valve apparatus 1 and transfers directly to the second crossflow valve 43 where coolant flow enters via port 115A and exits via port 115C as explained above also. At this point the coolant flow departs from the control valve apparatus 1 via port H and continues onwards to supply coolant to at least the first drive unit 5-1. The coolant flow then exits the first drive unit 5-1 and is split by a Y connection into either or both the second heat exchanger supply conduit 26, and therefore into the second heat exchanger 15, or around the second heat exchanger 15 via the second heat exchanger bypass conduit 27. Both the coolant flow from the second heat exchanger 15 and the second heat exchanger bypass conduit 27 re-enter the control valve apparatus 1 via ports B and E respectively and convene at the second heat exchanger bypass control valve 39 where coolant flow is selectively controlled from either the second heat exchanger 15 or the second heat exchanger bypass conduit 27 or a blend of both. The coolant flow exits the second heat exchanger bypass control valve 39 to enter the inlet of the second pump 55. Coolant then flows from the outlet of the second pump 55 to the first crossflow valve 41 where the coolant flow enters via port 95A and exits through port 95D as explained above. The coolant flow once again departs from the control valve apparatus 1 via port D and enters the inlet of the first heat exchanger 13. The coolant exits the first heat exchanger 13 outlet, re-entering the control valve apparatus 1 via port C, and enters the second crossflow valve 43 via port 115B. The coolant flow exits the valve 43 via port 115D to re-enter the inlet of the first pump 53, thus completing the larger coolant loop made up of the first, second and third coolant loops 17, 18, 19 joined in series.

**Table 4 - Bypass operating modes of second crossflow operating mode**

| Mode Reference | Description |
|---|---|
| 2-1 | • Coolant loops (17, 18, 19) in series |
| | • Battery unit 7 is bypassed |
| | • Second heat exchanger 15 receives full coolant flow |
| 2-2 | • Coolant loops (17, 18, 19) in series |
| | • Battery unit 7 is bypassed |
| | • Second heat exchanger 15 is blended with bypass |
| 2-3 | • Coolant loops (17, 18, 19) in series |
| | • Battery unit 7 is bypassed |
| | • Second heat exchanger 15 is bypassed |
| 2-4 | • Coolant loops (17, 18, 19) in series |
| | • Battery unit 7 is blended with bypass |
| | • Second heat exchanger 15 is bypassed |
| 2-5 | • Coolant loops (17, 18, 19) in series |
| | • Battery unit 7 receives full coolant flow |
| | • Second heat exchanger 15 is bypassed |
| 2-6 | • Coolant loops (17, 18, 19) in series |
| | • Battery unit 7 receives full coolant flow |
| | • Second heat exchanger 15 is blended with bypass |
| 2-7 | • Coolant loops (17, 18, 19) in series |
| | • Battery unit 7 receives full coolant flow |
| | • Second heat exchanger 15 receives full coolant flow |

Similar to the first crossflow operating mode, the second crossflow operating mode also features preferable discrete modes of operation of those shown in Table 4. For example, Mode 2-3 allows for heat recovery from the EDU 5-n and the electric power unit 29 to the cabin of the vehicle V. The heat energy dissipated from the EDU 5-n and the electric power unit 29 is transferred to the coolant and transported to the first heat exchanger 13 which is configured to extract the heat energy from the coolant and transfer it to the vehicle cabin. To facilitate this, and minimise heat loss where it is not needed, the battery unit 7 and the second heat exchanger are bypassed in order to maximise heat energy supplied to the vehicle cabin.

Mode 2-5 allows for heat energy to be shared between the EDU 5-n and the electric power unit 29 and the battery unit 7 to warm the battery in cold ambient environmental temperatures. This mode can optionally heat the cabin of the vehicle simultaneously in the fist heat exchanger is configured to extract heat from the coolant that is flowing through it.

Mode 2-7 is preferable as it provides cooling to all components of the thermal management system 3 that require cooling. Dissipated heat from the battery unit 7, the EDU 5-n and the electric power unit 29 is transferred to the coolant in order to be rejected by flowing through the second heat exchanger 15. For maximum cooling effect, the first heat exchanger 13 can be configured to chill the coolant as it passes through. Therefore, Mode 2-7 is considered to be a fail-safe mode in the event of the failure of either the first pump 53 or the second pump 55 as the serial nature of the second crossflow valve mode ensures that coolant will flow to all components of the system, even if only one pump is functional.

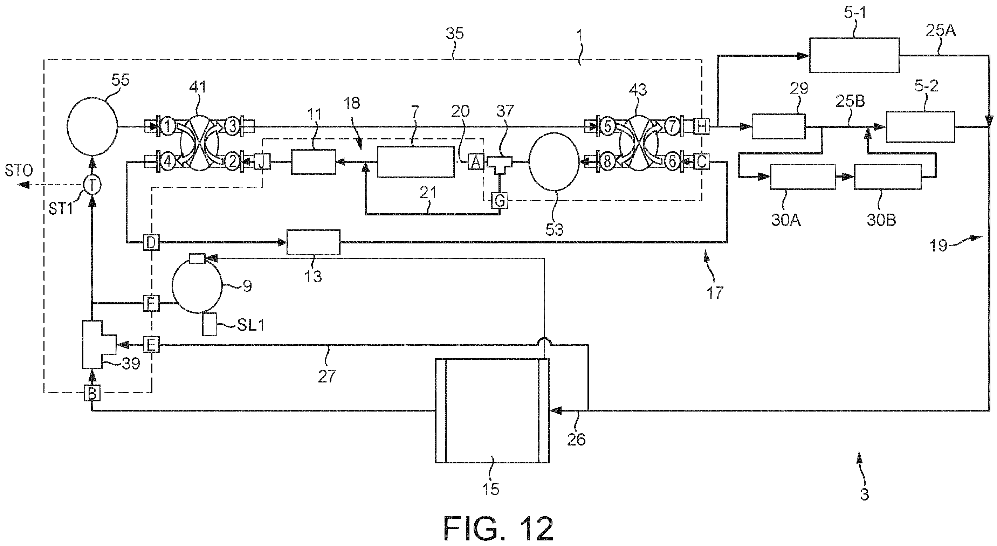

The control valve apparatus 1 is shown in the third crossflow operating mode in Figure 12. The second valve control unit 33 is configured such that the first crossflow valve body 119 is in the third crossflow operating mode (shown in Figure 7C). The first crossflow port 95A and the fourth crossflow port 95D of the first crossflow valve 41 are in fluid communication with each other; and the second crossflow port 95B and the third crossflow port 95C of the first crossflow valve 43 are in fluid communication with each other. The second crossflow valve body 119 is in the third crossflow operating mode (shown in Figure 8C). The first crossflow port 115A and the fourth crossflow port 115D of the second crossflow valve 43 are in fluid communication with each other; and the second crossflow port 115B and the third crossflow port 115C of the second crossflow valve 43 are in fluid communication with each other.

The effect of configuring the control valve apparatus 1 in the third crossflow operating mode is that the second and third coolant loops 18, 19 operate in parallel. Furthermore, in this configuration the first heat exchanger 13 in the first coolant loop 17 is in series with the third coolant loop 19 along with the second heat exchanger 15 and at least the first drive unit 5-1.

Referring now to Figure 12 that shows the third crossflow operating mode and referring first to the second coolant loop 18, coolant flows from the outlet of the first pump 53 to the battery bypass control valve 37. At this point the coolant flow is departing the control valve apparatus 1 via either or both ports A and G. The battery bypass control valve 37 selectively diverts the coolant either to the battery supply conduit 20, and therefore into the battery unit 7, or around the battery unit 7 via a battery bypass conduit 21 or a combination of both as explained above. The outlet of the battery unit 7 and the outlet of the bypass conduit 21 then rejoin before the coolant flow is directed into the inlet of the coolant heater 11. The coolant flows from the outlet of the coolant heater 11 to flow back into the control valve apparatus 1 via port J and subsequently into the first crossflow valve 41 where it enters via port 95B and exits through port 95C as explained above. The coolant flow then remains within the control valve apparatus 1 and transfers directly to the second crossflow valve 43 where coolant flow enters via port 115A and exits via port 115D as explained above also. The coolant flow exits the valve 43 via port 115D to re-enter the inlet of the first pump 53, thus completing the second coolant loop 18.

Referring still to Figure 12 and now to the combination of the first and third coolant loops 17, 19 in the third crossflow operating mode, coolant flows from the outlet of the second pump 55 to the first crossflow valve 41 where the coolant flow enters via port 95A and exits through port 95D as explained above. At this point the coolant flow departs from the control valve apparatus 1 via port D and enters the inlet of the first heat exchanger 13. The coolant exits the first heat exchanger 13 outlet, re-entering the control valve apparatus 1 via port C, and enters the second crossflow valve 43 via port 115B and exits via port 115C as explained above also. At this point the coolant flow departs from the control valve apparatus 1 via port H and continues onwards to supply coolant to at least the first drive unit 5-1. The coolant flow then exits the first drive unit 5-1 and is split by a Y connection into either or both the second heat exchanger supply conduit 26, and therefore into the second heat exchanger 15, or around the second heat exchanger 15 via the second heat exchanger bypass conduit 27. Both the coolant flow from the second heat exchanger 15 and the send heat exchanger bypass conduit 27 re-enter the control valve apparatus 1 via ports B and E respectively and convene at the second heat exchanger bypass control valve 39 where coolant flow is selectively controlled from either the second heat exchanger 15 or the second heat exchanger bypass conduit 27 or a blend of both. The coolant flow exits the second heat exchanger bypass control valve 39 to re-enter the inlet of the second pump 55, thus completing the combination of the first and third coolant loops 17, 19.

**Table 5 - Bypass operating modes of third crossflow operating mode**

| Mode Reference | Description |
|---|---|
| 3-1 | • Parallel coolant loops (18, 19) |
| | • First coolant loop 17 in series with third coolant loop 19 |
| | • Battery unit 7 is bypassed |
| | • Second heat exchanger 15 receives full coolant flow |
| 3-2 | • Parallel coolant loops (18, 19) |
| | • First coolant loop 17 in series with third coolant loop 19 |
| | • Battery unit 7 is bypassed |
| | • Second heat exchanger 15 is blended with bypass |
| 3-3 | • Parallel coolant loops (18, 19) |
| | • First coolant loop 17 in series with third coolant loop 19 |
| | • Battery unit 7 is bypassed |
| | • Second heat exchanger 15 is bypassed |
| 3-4 | • Parallel coolant loops (18, 19) |
| | • First coolant loop 17 in series with third coolant loop 19 |
| | • Battery unit 7 is blended with bypass |
| | • Second heat exchanger 15 is bypassed |
| 3-5 | • Parallel coolant loops (18, 19) |
| | • First coolant loop 17 in series with third coolant loop 19 |
| | • Battery unit 7 receives full coolant flow |
| | • Second heat exchanger 15 is bypassed |
| 3-6 | • Parallel coolant loops (18, 19) |
| | • First coolant loop 17 in series with third coolant loop 19 |
| | • Battery unit 7 receives full coolant flow |
| | • Second heat exchanger 15 is blended with bypass |
| 3-7 | • Parallel coolant loops (18, 19) |
| | • First coolant loop 17 in series with third coolant loop 19 |
| | • Battery unit 7 receives full coolant flow |
| | • Second heat exchanger 15 receives full coolant flow |

In addition to the first and second crossflow valve operating modes, the third crossflow valve operating mode also features a number of preferable discrete modes of operation of those shown in Table 5.

For example, Mode 3-5 enable enables heat recovery from the EDU 5-n and the electric power unit 29 to the cabin of the vehicle V. This is facilitated by bypassing the second heat exchanger 15 in order to transport the heat energy dissipated by the EDU 5-n and the electric power unit 29 to the first heat exchanger 13, where it is transferred into the cabin of the vehicle V. This useful in low ambient environmental temperatures to efficiently heat the cabin of the vehicle V utilising heat energy that could otherwise be wasted. Optionally, the HV coolant heater 11 could be enabled to supply heat to the battery unit 7.

Three of the abovementioned discrete modes of each crossflow operating mode shown in Tables 3, 4 and 5 operate to blend the flow between either the battery unit 7 or the second heat exchanger 15 and the respective bypass conduit 21, 27. These modes are useful for situations where full coolant flow is not necessary, for example, where the temperature of the component being cooled is approaching a set point. Slowing down the rate of heat transfer provides enhanced control of the coolant temperature and serves to prevent unnecessary hysteresis in the thermal system.

When recovering heat from the EDU 5-n and the electric power unit 29 to the cabin of the vehicle V, for example in Modes 2-2, 2-6, 3-2 and 3-6, a user of the vehicle V may wish to select the desired temperature of the cabin. Using a selectively proportional blended flow between the second heat exchanger 15 and the second heat exchanger bypass 27 allows for control of the temperature of the coolant passing through the first heat exchanger 13, and thus the amount of heat energy transfer to the cabin of the vehicle V.

Proportional control of the coolant flow through the battery unit 7 and the battery unit bypass 21 is useful in Mode 2-4 wherein some of the heat used to heat the EDU 5-n and the electric power unit 29 is transferred to the battery unit 7. The amount of heat being transferred to the battery unit 7 is proportional to the amount of flow being allowed to flow through the battery unit 7.

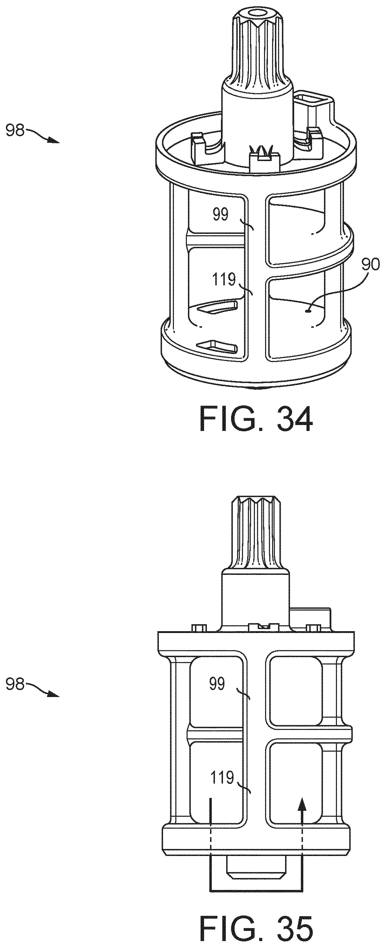

Next, as shown in Figure 34, an embodiment of the crossflow valve body 98 comprising first and second crossflow valves 41, 43 of second valve unit 33 is shown. In this view, a metered hole is shown in the lowermost planar portion of the combined valve body, hereinafter referred to as a bleed hole 90. The purpose of the bleed hole 90 is to allow some coolant flow cross from one coolant loop to another when the coolant network is configured to comprise parallel coolant loops, for example, when the thermal management system 3 is configured in either the first or the third crossflow operating modes. In a case where the coolant in one coolant loop is at a higher temperature than the coolant in the other coolant loop, a pressure differential will occur between the coolant loops. This pressure differential will cause coolant to flow through the bleed hole 90 and therefore from one coolant loop to the other as shown by the arrow in Figure 35, for example, where coolant flows from one side of the second crossflow valve body portion 119 to the other. This condition may occur for example where the vehicle has been soaked in very low ambient environmental temperatures, and the battery pack needs to be warmed. In this case, the HV coolant heater 11 warms the coolant in the coolant loop comprising the battery unit 7, whilst the coolant loop comprising the EDU 5-n remains lower in temperature.

Beneficially, by allowing a metered exchange of coolant between the coolant loops, there is a requirement for just one degas tank 9 for the entire coolant network, regardless of the crossflow operating mode the thermal management system 3 is configured to.

It will be appreciated that various changes and modifications can be made to the present invention without departing from the scope of the present invention as defined in the appended claims.

## Claims

1. A control system (150) for controlling a control valve apparatus of an electric vehicle thermal management system (3), the electric vehicle thermal management system (3) comprising:
a battery unit (7);
a first heat exchanger (13);
an electric drive unit (5-1, 5-2);
a second heat exchanger (15);
a crossflow valve unit (33) comprising a first crossflow valve (41) and a second crossflow valve (43) the first and second crossflow valves being rotary valves that are offset from each other along a crossflow valve unit axis (X2);
a crossflow actuator (51) configured to actuate the crossflow valve unit (33), wherein the first and second crossflow valves are configured to be operated by the crossflow actuator (51); and
a coolant network (17, 18, 19) for supplying coolant to the battery unit (7), the first heat exchanger (13), the electric drive unit (5-1, 5-2), the second heat exchanger (15) and the crossflow valve unit (33), wherein the crossflow valve unit (33) is configured to control coolant flow through the coolant network by partitioning the coolant network into one or more network configurations,
the control system (10) comprising one or more processors collectively configured to:
receive data relating to a vehicle operating condition;
determine a crossflow valve control signal (CS2) in dependence on the received data, the crossflow valve control signal configured to control the crossflow valve unit (33) such that the network configuration of the coolant network comprises a first coolant circulation loop (18) containing the battery unit (7) and a second coolant circulation loop (17, 19) containing the first heat exchanger (13), the electric drive unit (5-1, 5-2) and the second heat exchanger (15);
output the crossflow valve control signal (CS2) to the crossflow valve unit (33), wherein the crossflow valve signal is received by the crossflow actuator to control the crossflow valve unit (33).

2. A control system as claimed in claim 1, wherein:
the first coolant circulation loop (18) comprises a battery supply conduit (20) for supplying coolant to the battery, a battery bypass conduit (21) for bypassing coolant from the battery and a battery bypass control valve (37) configured to control the flow of the coolant through the battery supply conduit and/or the battery bypass conduit; and
the second coolant circulation loop (17, 19) comprises a heat exchanger conduit for supplying coolant to the second heat exchanger, a heat exchanger bypass conduit for bypassing coolant from the second heat exchanger and a second heat exchanger bypass control valve (39) configured to control the proportion of the coolant that flows through the heat exchanger supply conduit and/or the heat exchanger bypass conduit and wherein the control system is configured to determine one or more control signals in dependence on the received data to control the battery bypass control valve (37) and/or second heat exchanger bypass control valve (39).

3. A control system as claimed in Claim 2, wherein the electric vehicle thermal management system comprises an actuator configured to actuate the battery bypass control valve (37) and the second heat exchanger bypass control valve (39) and wherein the one or more control signals comprises an actuator control signal to control the battery bypass control valve and the second heat exchanger bypass control valve.

4. A control system as claimed in Claim 2 or Claim 3, wherein one or more control signals are configured to:
control the battery bypass control valve (37) between a bypass position in which coolant flows through the battery bypass conduit and a flow position in which coolant flows through the battery conduit and blended mode positions in which coolant flows through the battery supply conduit and the battery bypass conduit; and;
control the second heat exchanger bypass control valve (39) between a flow position in which coolant flows through the second heat exchanger supply conduit and a bypass position in which coolant flows through the heat exchanger bypass conduit and blended mode positions in which coolant flows through the heat exchanger supply conduit and the heat exchanger bypass conduit.

5. A control system as claimed in Claim 4, wherein the one or more control signals are configured to control the battery bypass control valve (37) to its bypass position and to control the second heat exchanger bypass control valve (39) to a blended mode position.

6. A control system as claimed in Claim 4, wherein the one or more control signals are configured to control the battery bypass control valve (37) to its flow position and to control the second heat exchanger bypass control valve (39) to its bypass position.

7. A control system as claimed in Claim 6, wherein the one or more control signals are configured to control the first heat exchanger to transfer heat to a vehicle cabin.

8. A control system as claimed in Claim 6 or Claim 7, wherein the electric thermal management system comprises a coolant heater (11) in the first coolant loop and the one or more control signals are configured to control the coolant heat to supply heat to the coolant in order to supply heat to the battery unit.

9. A control system as claimed in Claim 4, wherein the one or more control signals are configured to control the battery bypass control valve (37) to its flow position and to control the second heat exchanger bypass control valve (39) to a blended mode position.

10. A control system as claimed in any preceding claim wherein the electric vehicle thermal management system comprises a first pump (53) within the first coolant loop (18) for circulating coolant through the first coolant loop and comprises a second pump (55) within the second coolant loop (17, 19) for circulating coolant through the second coolant loop.

11. An electric vehicle thermal management system comprising the control system of claims 1 to 10.

12. An electric vehicle comprising the control system of claims 1 to 10.

13. A method for controlling a control valve apparatus of an electric vehicle thermal management system (3), the electric vehicle thermal management system (3) comprising: a battery unit (7); a first heat exchanger (13); an electric drive unit (5-1, 5-2); a second heat exchanger (15); a crossflow valve unit (33) comprising a first crossflow valve (41) and a second crossflow valve (43), the first and second crossflow valves being rotary valves that are offset from each other along a crossflow valve unit axis (X2); a crossflow (51) configured to actuate the crossflow valve unit (33), wherein the first and second crossflow valves are configured to be operated by the crossflow actuator; and a coolant network (17, 19) for supplying coolant to the battery unit (7), the first heat exchanger (13), the electric drive unit (5-1, 5-2), the second heat exchanger (15) and the crossflow valve unit (33), wherein the crossflow valve unit (33) is configured to control coolant flow through the coolant network by partitioning the coolant network into one or more network configurations, the method comprising:
receiving data relating to a vehicle operating condition;
determining a crossflow valve control signal (CS2) in dependence on the received data, the crossflow valve control signal configured to control the crossflow valve unit (33) such that the network configuration of the coolant network comprises a first coolant circulation loop (18) containing the battery unit (7) and a second coolant circulation loop (17, 19) containing the electric drive unit (5-1, 5-2), the first heat exchanger (13) and the second heat exchanger (15);
outputting the crossflow valve control signal (CS2) to the crossflow valve unit (33), wherein the crossflow valve signal is received by the crossflow actuator to control the crossflow valve unit (33).

## Patentansprüche

1. Steuersystem (150) zum Steuern einer Regelventileinrichtung eines Wärmemanagementsystems (3) für Elektrofahrzeuge, das Wärmemanagementsystem (3) für Elektrofahrzeuge umfassend:
eine Batterieeinheit (7);
einen ersten Wärmetauscher (13);
eine elektrische Antriebseinheit (5-1, 5-2);
einen zweiten Wärmetauscher (15);
eine Querstromventileinheit (33) umfassend ein erstes Querstromventil (41) und ein zweites Querstromventil (43), wobei das erste und das zweite Querstromventil Drehventile sind, die entlang einer Achse (X2) der Querstromventileinheit versetzt zueinander angeordnet sind;
einen Querstromstellantrieb (51), der zur Betätigung der Querstromventileinheit (33) konfiguriert ist, wobei das erste und das zweite Querstromventil konfiguriert sind, um durch den Querstromstellantrieb (51) betätigt zu werden; und
ein Kühlmittelnetzwerk (17, 18, 19) zum Zuführen von Kühlmittel zur Batterieeinheit (7), zum ersten Wärmetauscher (13), der elektrischen Antriebseinheit (5-1, 5-2), des zweiten Wärmetauschers (15) und der Querstromventileinheit (33), wobei die Querstromventileinheit (33) konfiguriert ist, um den Kühlmittelfluss durch das Kühlmittelnetzwerk zu steuern, indem sie das Kühlmittelnetzwerk in eine oder mehrere Netzwerkkonfigurationen unterteilt, das Steuersystem (10) umfassend einen oder mehrere Prozessoren, die gemeinsam konfiguriert sind, um:
Daten zu einem Betriebszustand des Fahrzeugs zu empfangen;
in Abhängigkeit von den empfangenen Daten ein Querstromventilsteuersignal (CS2) zu bestimmen, wobei das Querstromventilsteuersignal konfiguriert ist, um die Querstromventileinheit (33) so zu steuern, dass die Netzwerkkonfiguration des Kühlmittelnetzwerks einen ersten Kühlmittelkreislauf (18), der die Batterieeinheit (7) enthält, und einen zweiten Kühlmittelkreislauf (17, 19), der den ersten Wärmetauscher (13) enthält, die elektrische Antriebseinheit (5-1, 5-2) und den zweiten Wärmetauscher (15) umfasst;
das Querstromventilsteuersignal (CS2) an die Querstromventileinheit (33) auszugeben, wobei das Querstromventilsteuersignal vom Querstromventilstellantrieb empfangen wird, um die Querstromventileinheit (33) zu steuern.

2. Steuersystem nach Anspruch 1, wobei:
der erste Kühlmittelkreislauf (18) eine Batterieversorgungsleitung (20) zum Zuführen von Kühlmittel zur Batterie, eine Batterieumgehungsleitung (21) zum Umleiten von Kühlmittel aus der Batterie und ein Batterieumgehungssteuerventil (37) umfasst, das konfiguriert ist, um den Durchfluss des Kühlmittels durch die Batterieversorgungsleitung und/oder die Batterieumgehungsleitung zu steuern; und
der zweite Kühlmittelkreislauf (17, 19) eine Wärmetauscherleitung zum Zuführen von Kühlmittel zum zweiten Wärmetauscher, eine Wärmetauscherumgehung zum Umleiten von Kühlmittel vom zweiten Wärmetauscher sowie ein zweites Wärmetauscherumgehungsteuerventil (39) umfasst, das konfiguriert ist, um den Anteil des Kühlmittels zu steuern, der durch die Wärmetauscherzufuhrleitung und/oder die Wärmetauscherumgehung fließt
und wobei das Steuersystem konfiguriert ist, um in Abhängigkeit von den empfangenen Daten ein oder mehrere Steuersignale zu bestimmen, um das Batterieumgehungssteuerventil (37) und/oder das zweite Wärmetauscherumgehungssteuerventil (39) zu steuern.

3. Steuersystem nach Anspruch 2, wobei das Wärmemanagementsystem für Elektrofahrzeuge einen Stellantrieb umfasst, der konfiguriert ist, um das Batterieumgehungssteuerventil (37) und das zweite Wärmetauscherumgehungssteuerventil (39) zu betätigen, und wobei das eine oder die mehreren Steuersignale ein Stellantriebssteuersignal zum Steuern des Batterieumgehungssteuerventils und des zweiten Wärmetauscherumgehungssteuerventils umfassen.

4. Steuersystem nach Anspruch 2 oder Anspruch 3, wobei ein oder mehrere Steuersignale konfiguriert sind, um:
das Batterieumgehungssteuerventil (37) zwischen einer Umgehungsstellung, in der Kühlmittel durch die Batterieumgehungsleitung fließt, und einer Durchflussstellung, in der Kühlmittel durch die Batterieleitung fließt, sowie Mischbetriebsstellungen, in denen Kühlmittel sowohl durch die Batterieversorgungsleitung als auch durch die Batterieumgehungsleitung fließt, zu steuern; und
das zweite Wärmetauscherumgehungssteuerventil (39) zwischen einer Durchflussstellung, in der Kühlmittel durch die zweite Wärmetauscherzufuhrleitung fließt, und einer Umgehungsstellung, in der Kühlmittel durch die Wärmetauscherumgehungsleitung fließt, sowie zwischen Mischbetriebsstellungen, in denen Kühlmittel durch die Wärmetauscherzufuhrleitung und die Wärmetauscherumgehungsleitung fließt, zu steuern.

5. Steuersystem nach Anspruch 4, wobei das eine oder die mehreren Steuersignale konfiguriert sind, um das Batterieumgehungssteuerventil (37) in seine Umgehungsstellung und das zweite Wärmetauscherumgehungssteuerventil (39) in eine Mischbetriebsstellung zu steuern.

6. Steuersystem nach Anspruch 4, wobei das eine oder die mehreren Steuersignale konfiguriert sind, um das Batterieumgehungssteuerventil (37) in seine Durchflussstellung und das zweite Wärmetauscherumgehungssteuerventil (39) in eine Umgehungsstellung zu steuern.

7. Steuersystem nach Anspruch 6, wobei das eine oder die mehreren Steuersignale konfiguriert sind, um den ersten Wärmetauscher so zu steuern, dass er Wärme an einen Fahrzeuginnenraum abgibt.

8. Steuersystem nach Anspruch 6 oder Anspruch 7, wobei das elektrische Wärmemanagementsystem einen Kühlmittelheizer (11) im ersten Kühlmittelkreislauf umfasst und das eine oder die mehreren Steuersignale konfiguriert sind, um die Kühlmittelwärme so zu steuern, dass dem Kühlmittel Wärme zugeführt wird, um der Batterieeinheit Wärme zuzuführen.

9. Steuersystem nach Anspruch 4, wobei das eine oder die mehreren Steuersignale konfiguriert sind, um das Batterieumgehungssteuerventil (37) in seine Durchflussstellung und das zweite Wärmetauscherumgehungssteuerventil (39) in eine Mischbetriebsstellung zu steuern.

10. Steuersystem nach einem der vorstehenden Ansprüche, wobei das Wärmemanagementsystem für Elektrofahrzeuge eine erste Pumpe (53) innerhalb des ersten Kühlmittelkreislaufs (18) zum Zirkulieren des Kühlmittels durch den ersten Kühlmittelkreislauf sowie eine zweite Pumpe (55) innerhalb des zweiten Kühlmittelkreislaufs (17, 19) zum Zirkulieren des Kühlmittels durch den zweiten Kühlmittelkreislauf umfasst.

11. Wärmemanagementsystem für Elektrofahrzeuge umfassend das Steuersystem nach den Ansprüchen 1 bis 10.

12. Elektrofahrzeug umfassend das Steuersystem nach den Ansprüchen 1 bis 10.

13. Verfahren zum Steuern einer Regelventileinrichtung eines Wärmemanagementsystems (3) für Elektrofahrzeuge, das Wärmemanagementsystem (3) für Elektrofahrzeuge umfassend: eine Batterieeinheit (7); einen ersten Wärmetauscher (13); eine elektrische Antriebseinheit (5-1, 5-2); einen zweiten Wärmetauscher (15); eine Querstromventileinheit (33) umfassend ein erstes Querstromventil (41) und ein zweites Querstromventil (43), wobei das erste und das zweite Querstromventil Drehventile sind, die entlang einer Achse (X2) der Querstromventileinheit versetzt zueinander angeordnet sind; einen Querstrom (51), der zur Betätigung der Querstromventileinheit (33) konfiguriert ist, wobei das erste und das zweite Querstromventil konfiguriert sind, um durch den Querstromstellantrieb betätigt zu werden; und ein Kühlmittelnetzwerk (17, 19) zum Zuführen von Kühlmittel zur Batterieeinheit (7), zum ersten Wärmetauscher (13), der elektrischen Antriebseinheit (5-1, 5-2), des zweiten Wärmetauschers (15) und der Querstromventileinheit (33), wobei die Querstromventileinheit (33) konfiguriert ist, um den Kühlmittelfluss durch das Kühlmittelnetzwerk zu steuern, indem sie das Kühlmittelnetzwerk in eine oder mehrere Netzwerkkonfigurationen unterteilt, das Verfahren umfassend:
Empfangen von Daten zu einem Betriebszustand des Fahrzeugs;
Bestimmen eines Querstromventilsteuersignals (CS2) in Abhängigkeit von den empfangenen Daten, wobei das Querstromventilsteuersignal konfiguriert ist, um die Querstromventileinheit (33) so zu steuern, dass die Netzwerkkonfiguration des Kühlmittelnetzwerks einen ersten Kühlmittelkreislauf (18), der die Batterieeinheit (7) enthält, und einen zweiten Kühlmittelkreislauf (17, 19), der die elektrische Antriebseinheit (5-1, 5-2) enthält, den ersten Wärmetauscher (13) und den zweiten Wärmetauscher (15) umfasst;
Ausgeben des Querstromventilsteuersignals (CS2) an die Querstromventileinheit (33), wobei das Querstromventilsteuersignal vom Querstromventilstellantrieb empfangen wird, um die Querstromventileinheit (33) zu steuern.

## Revendications

1. Système de commande (150) permettant de commander un appareil à vanne de commande d'un système de gestion thermique de véhicule électrique (3), le système de gestion thermique de véhicule électrique (3) comprenant :
une unité de batterie (7) ;
un premier échangeur de chaleur (13) ;
une unité d'entraînement électrique (5-1, 5-2) ;
un second échangeur de chaleur (15) ;
une unité de vannes d'écoulement transversal (33) comprenant une première vanne d'écoulement transversal (41) et une seconde vanne d'écoulement transversal (43), les première et seconde vannes d'écoulement transversal étant des vannes rotatives qui sont décalées l'une par rapport à l'autre le long d'un axe d'unité de vanne d'écoulement transversal (X2) ;
un actionneur d'écoulement transversal (51) conçu pour actionner l'unité de vanne d'écoulement transversal (33), dans lequel les première et seconde vannes d'écoulement transversal sont conçues pour être actionnées par l'actionneur d'écoulement transversal (51) ; et
un réseau de réfrigérant (17, 18, 19) destiné à fournir du réfrigérant à l'unité de batterie (7), au premier échangeur de chaleur (13), à l'unité d'entraînement électrique (5-1, 5-2), au second échangeur de chaleur (15) et à l'unité de vanne d'écoulement transversal (33), dans lequel l'unité de vanne d'écoulement transversal (33) est conçue pour commander l'écoulement de réfrigérant à travers le réseau de réfrigérant en partitionnant le réseau de réfrigérant en une ou plusieurs configurations de réseau, le système de commande (10) comprenant un ou des processeurs configurés collectivement pour :
recevoir des données relatives à une condition de fonctionnement de véhicule ;
déterminer un signal de commande de vanne d'écoulement transversal (CS2) en fonction des données reçues, le signal de commande de vanne d'écoulement transversal étant configuré pour commander l'unité de vanne d'écoulement transversal (33) de telle sorte que la configuration réseau du réseau de réfrigérant comprend une première boucle de circulation de réfrigérant (18) contenant l'unité de batterie (7) et une seconde boucle de circulation de réfrigérant (17, 19) contenant le premier échangeur de chaleur (13), l'unité d'entraînement électrique (5-1, 5-2) et le second échangeur de chaleur (15) ;
délivrer le signal de commande de vanne d'écoulement transversal (CS2) à l'unité de vanne d'écoulement transversal (33), dans lequel le signal de vanne d'écoulement transversal est reçu par l'actionneur d'écoulement transversal pour commander l'unité de vanne d'écoulement transversal (33).

2. Système de commande selon la revendication 1, dans lequel :
la première boucle de circulation de réfrigérant (18) comprend un conduit d'alimentation de batterie (20) permettant de fournir du réfrigérant à la batterie, un conduit de dérivation de batterie (21) permettant de contourner le réfrigérant provenant de la batterie et une vanne de commande de dérivation de batterie (37) conçue pour réguler l'écoulement du réfrigérant à travers le conduit d'alimentation de batterie et/ou le conduit de dérivation de batterie ; et
la seconde boucle de circulation de réfrigérant (17, 19) comprend un conduit d'échangeur de chaleur pour fournir du réfrigérant au second échangeur de chaleur, un conduit de dérivation de l'échangeur de chaleur pour contourner le réfrigérant du second échangeur de chaleur et une seconde vanne de commande de dérivation de l'échangeur de chaleur (39) conçue pour réguler la proportion du réfrigérant qui s'écoule à travers le conduit d'alimentation de l'échangeur de chaleur et/ou le conduit de dérivation de l'échangeur de chaleur
et dans lequel le système de commande est configuré pour déterminer un ou des signaux de commande en fonction des données reçues pour commander la vanne de commande de dérivation de batterie (37) et/ou la seconde vanne de commande de dérivation d'échangeur de chaleur (39).

3. Système de commande selon la revendication 2, dans lequel le système de gestion thermique de véhicule électrique comprend un actionneur configuré pour actionner la vanne de commande de dérivation de batterie (37) et la seconde vanne de commande de dérivation d'échangeur de chaleur (39) et dans lequel le ou les signaux de commande comprennent un signal de commande d'actionneur pour commander la vanne de commande de dérivation de batterie et la seconde commande de dérivation d'échangeur de chaleur.

4. Système de commande selon la revendication 2 ou la revendication 3, dans lequel le système de commande est configuré pour :
commander la vanne de commande de dérivation de batterie (37) entre une position de dérivation dans laquelle le réfrigérant s'écoule à travers le conduit de dérivation de batterie et une position d'écoulement dans laquelle le réfrigérant s'écoule à travers le conduit de batterie et des positions de mode mélangé dans lesquelles le réfrigérant s'écoule à travers le conduit d'alimentation de la batterie et le conduit de dérivation de batterie ; et ;
commander la seconde vanne de commande de dérivation de l'échangeur de chaleur (39) entre une position d'écoulement dans laquelle le réfrigérant s'écoule à travers le second conduit d'alimentation de l'échangeur de chaleur et une position de dérivation dans laquelle le réfrigérant s'écoule à travers le conduit de dérivation de l'échangeur de chaleur et des positions en mode mélangé dans lesquelles le réfrigérant s'écoule à travers le conduit d'alimentation de l'échangeur de chaleur et la conduite de dérivation de l'échangeur de chaleur.

5. Système de commande selon la revendication 4, dans lequel le ou les signaux de commande sont configurés pour commander la vanne de commande de dérivation de batterie (37) vers sa position de dérivation et pour commander la seconde vanne de commande de dérivation de l'échangeur de chaleur (39) vers une position de mode mélangé.

6. Système de commande selon la revendication 4, dans lequel le ou les signaux de commande sont configurés pour commander la vanne de commande de dérivation de batterie (37) vers sa position d'écoulement et pour commander la seconde vanne de commande de dérivation d'échangeur de chaleur (39) vers sa position de dérivation

7. Système de commande selon la revendication 6, dans lequel le ou les signaux de commande sont configurés pour commander le premier échangeur de chaleur afin de transférer de la chaleur à un habitacle de véhicule.

8. Système de commande selon la revendication 6 ou la revendication 7, dans lequel le système de gestion thermique électrique comprend un dispositif de chauffage de réfrigérant (11) dans la première boucle de réfrigérant et le ou les signaux de commande sont configurés pour commander la chaleur de réfrigérant pour fournir de la chaleur au réfrigérant afin de fournir de la chaleur à l'unité de batterie.

9. Système de commande selon la revendication 4, dans lequel le ou les signaux de commande sont configurés pour commander la vanne de commande de dérivation de batterie (37) vers sa position d'écoulement et pour commander la seconde vanne de commande de dérivation d'échangeur de chaleur (39) vers une position de mode mélangé.

10. Système de commande selon l'une quelconque revendication précédente, dans lequel le système de gestion thermique de véhicule électrique comprend une première pompe (53) à l'intérieur de la première boucle de réfrigérant (18) pour faire circuler le réfrigérant à travers la première boucle de réfrigérant et comprend une seconde pompe (55) à l'intérieur de la seconde boucle de réfrigérant (17, 19) pour faire circuler le réfrigérant à travers la seconde boucle de réfrigérant.

11. Système de gestion thermique de véhicule électrique comprenant le système de commande selon les revendications 1 à 10.

12. Véhicule électrique comprenant le système de commande selon les revendications 1 à 10.

13. Procédé de commande d'un appareil à vanne de commande d'un système de gestion thermique de véhicule électrique (3), le système de gestion thermique de véhicule électrique (3) comprenant : une unité de batterie (7) ; un premier échangeur de chaleur (13) ; une unité d'entraînement électrique (5-1, 5-2) ; un second échangeur de chaleur (15) ; une unité de vannes d'écoulement transversal (33) comprenant une première vanne d'écoulement transversal (41) et une seconde vanne d'écoulement transversal (43), les première et seconde vannes d'écoulement transversal étant des vannes rotatives qui sont décalées l'une par rapport à l'autre le long d'un axe d'unité de vanne d'écoulement transversal (X2) ; un écoulement transversal (51) conçu pour actionner l'unité de vanne d'écoulement transversal (33), dans lequel les première et seconde vannes d'écoulement transversal sont conçues pour être actionnées par l'actionneur d'écoulement transversal ; et un réseau de réfrigérant (17, 19) pour fournir du réfrigérant à l'unité de batterie (7), au premier échangeur de chaleur (13), à l'unité d'entraînement électrique (5-1, 5-2), au second échangeur de chaleur (15) et à l'unité de vanne d'écoulement transversal (33), dans lequel l'unité de vanne d'écoulement transversal (33) est configurée pour commander un écoulement de réfrigérant à travers le réseau de réfrigérant en partitionnant le réseau de réfrigérant en une ou plusieurs configurations de réseau, le procédé comprenant :
la réception de données relatives à une condition de fonctionnement de véhicule ;
la détermination d'un signal de commande de vanne d'écoulement transversal (CS2) en fonction des données reçues, le signal de commande de vanne d'écoulement transversal étant configuré pour commander l'unité de vanne d'écoulement transversal (33) de telle sorte que la configuration de réseau du réseau de réfrigérant comprend une première boucle de circulation de réfrigérant (18) contenant l'unité de batterie (7) et une seconde boucle de circulation de réfrigérant (17, 19) contenant l'unité d'entraînement électrique (5-1, 5-2), le premier échangeur de chaleur (13) et le second échangeur de chaleur (15) ;
la délivrance en sortie du signal de commande de vanne d'écoulement transversal (CS2) à l'unité de vanne d'écoulement transversal (33), dans lequel le signal de vanne d'écoulement transversal est reçu par l'actionneur d'écoulement transversal pour commander l'unité de vanne d'écoulement transversal (33).
